# EUROPEAN PATENT APPLICATION

(11) **EP 4 841 530 A2**
(43) Date of publication of application: **18.11.2026**
(21) Application number: 26209760.3
(22) Date of filing: 09.05.2022
(51) Int. Cl.: G06N 20/00

(54) **METHOD AND APPARATUS HAVING OPTIMIZED SIGNALING THROUGH ML PROBE REQUEST FRAME IN ORDER TO PREVENT DUPLICATE RECEPTION OF IMPORTANT UPDATE INFORMATION IN WIRELESS LAN SYSTEM**

(30) Priority: 12.01.2022 KR 20220004789
(62) Document number(s) of the earlier application(s) in accordance with Art. 76 EPC: 22920731.1 / 4 465 700
(71) Applicant: LG Electronics Inc., Yeongdeungpo-gu Seoul 07336 (KR)
(72) Inventor: KIM, Jiin, 06772 Seoul (KR); JANG, Insun, 06772 Seoul (KR); CHOI, Jinsoo, 06772 Seoul (KR); BAEK, Sunhee, 06772 Seoul (KR)
(74) Representative: Mooser, Sebastian Thomas

(57) **Abstract**

A method and an apparatus having optimized signaling through a multi-link (ML) probe request frame in order to prevent duplicate reception of important update information in a wireless LAN system are presented. Particularly, a reception MLD transmits an ML probe request frame to a transmis sion MLD through a first link. The reception MLD receives an ML probe response frame from the transmission MLD through the first link. The ML probe request frame includes a profile sub -element of a second transmission STA. The profile sub-element of the second transmission STA includes a critical update requested sub-field and an inclusion flag sub-field. When a first reception STA requests important update information for the second transmission STA, the value of the critical update requested sub-field is set to 1, and the profile sub-element of the second transmission STA further includes a last known BPCC sub-field.

## Description

### TECHNICAL FIELD

The present specification relates a multi-link operation in a wireless local area network (WLAN) system and, most particularly, to an optimized signaling method and apparatus through an ML probe request frame to prevent duplication of reception of critical update information.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.11be standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

The present specification proposes an optimized signaling method and apparatus through an ML probe request frame to prevent duplication of reception of critical update information in a wireless LAN system.

### TECHNICAL SOLUTION

An example of this specification proposes an optimized signaling method through an ML probe request frame to prevent duplication of reception of critical update information.

The present embodiment may be performed in a network environment in which a next generation WLAN system (IEEE 802.11be or EHT WLAN system) is supported. The next generation wireless LAN system is a WLAN system that is enhanced from an 802.11ax system and may, therefore, satisfy backward compatibility with the 802.11ax system.

The present embodiment proposes an optimized signaling method and device through an ML probe request frame using a newly defined indicator to prevent the reception of duplicate information when a non -AP STA requests critical update information on another AP within the AP MLD, but has already received partial critical update information through a beacon or probe response frame periodically. Here, a first transmitting STA operating on a first link included in a transmitting MLD may correspond to a reporting AP. A second transmitting STA operating on a second link rather than the first link may correspond to another AP or a requested AP.

A receiving Multi-link Device (MLD) transmits a Multi-Link (ML) probe request frame to a transmitting MLD through a first link.

The receiving MLD receives an ML probe response frame from the transmitting MLD through the first link.

The transmitting MLD includes a first transmitting station (STA) operating on the first link and a second transmitting STA operating on a second link. The receiving MLD includes a first receiving STA operating on the first link and a second receiving STA operating on the second link.

The ML probe request frame includes a profile subelement of the second transmitting STA.

The profile subelement of the second transmitting STA includes a Critical Update Requested subfield and an Inclusion Flag subfield.

When/Based on the first receiving STA requests/requesting critical update information for the secon d transmitting STA, a value of the Critical Update Requested subfield is set to 1, and the profile subelement of the second transmitting STA further includes a Last Known Basic Service Set (BSS) Parameters Change Count (BPCC) subfield.

The Last Known BPCC subfield includes a first BPCC value most recently obtained by the first receiving STA through a first beacon or a first probe response frame.

When/Based on a value of the Inclusion Flag subfield is/being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.

When/Based on the value of the Inclusion Flag subfield is/being 0, the second BPCC value may be obtained through a second beacon or a second probe response frame before the ML probe request frame is transmitted. The second beacon or the second probe response frame may be transmitted before the ML probe request frame is received, or may be transmitted before th e ML probe response frame is transmitted.

That is, this embodiment proposes a signaling method that uses the Inclusion Flag subfield to prevent redundant information from being transmitted in the ML probe response frame when partial critical update information is received through a beacon or probe response frame by further including the Inclusion Flag subfield in the ML probe request frame.

### ADVANTAGEOUS EFFECTS

According to the embodiment proposed in this specification, when a non-AP STA requests critical update information for another STA, the overhead of receiving duplicate information can be reduced by using a newly defined indicator.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 illustrates an example of a PPDU used in an IEEE standard.
FIG. 5 illustrates an operation based on UL-MU.
FIG. 6 illustrates an example of a trigger frame.
FIG. 7 illustrates an example of a common information field of a trigger frame.
FIG. 8 illustrates an example of a subfield included in a per user information field.
FIG. 9 describes a technical feature of the UORA scheme.
FIG. 10 illustrates an example of a PPDU used in the present specification.
FIG. 11 illustrates an example of a modified transmission device and/or receiving device of the present specification.
FIG. 12 shows an example of a structure of a STA MLD.
FIG. 13 illustrates structures of a Multi-link Control field and a Common Info field of a Multi-link Element.
FIG. 14 shows the structure of the Link Info field of Multi-link Element.
FIG. 15 shows an example of multiple BSSID sets on all links in a Multi-Link configuration.
FIG. 16 shows an example of the ML probe request format.
FIG. 17 shows an example of the structure of the STA Control field included in the per-STA profile of the Probe Request Multi-Link element.
FIG. 18 shows an example of the structure of the Last Known BPCC subfield included in the per-STA profile of the Probe Request Multi-Link element.
FIG. 19 shows another example of the structure of the STA Control field included in the per-STA profile of the Probe Request Multi-Link element.
FIG. 20 is a flowchart illustrating a procedure in which a transmitting MLD responses critical update information to another AP using an indicator to prevent duplication of reception of partial critical update information according to this embodiment.
FIG. 21 is a flowchart illustrating a procedure in which a receiving MLD requests critical update information for another AP using an indicator to prevent duplication of reception of partial critical update information according to this embodiment.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (EHT-signal)", it may denote that "EHT-signal" is proposed as an example of the "control information". In other words, the "control information" of the present specification is not limited to "EHT-signal", and "EHT-signal" may be proposed as an example of the "control information". In addition, when indicated as "control information (i.e., EHT -signal)", it may also mean that "EHT-signal" is proposed as an example of the "control information".

Technical features described individually in one figure in the present specification may be individually implemented, or may be simultaneously implemented.

The following example of the present specification may be applied to various wireless communication systems. For example, the following example of the present specification may be applied to a wireless local area network (WLAN) system. For example, the present specification may be applied to the IEEE 802.11a/g/n/ac standard or the IEEE 802.11ax standard. In addition, the present specification may also be applied to the newly proposed EHT standard or IEEE 802.11be standard. In addition, the example of the present specification may also be applied to a new WLAN standard enhanced from the EHT standard or the IEEE 802.11be standard. In addition, the example of the present specification may be applied to a mobile communication system. For example, it may be applied to a mobile communication system based on long term evolution (LTE) depending on a 3^{rd} generation partnership project (3GPP) standard and based on evolution of the LTE. In addition, the example of the present specification may be applied to a communication system of a 5G NR standard based on the 3GPP standard.

Hereinafter, in order to describe a technical feature of the present specification, a technical feature applicable to the present specification will be described.

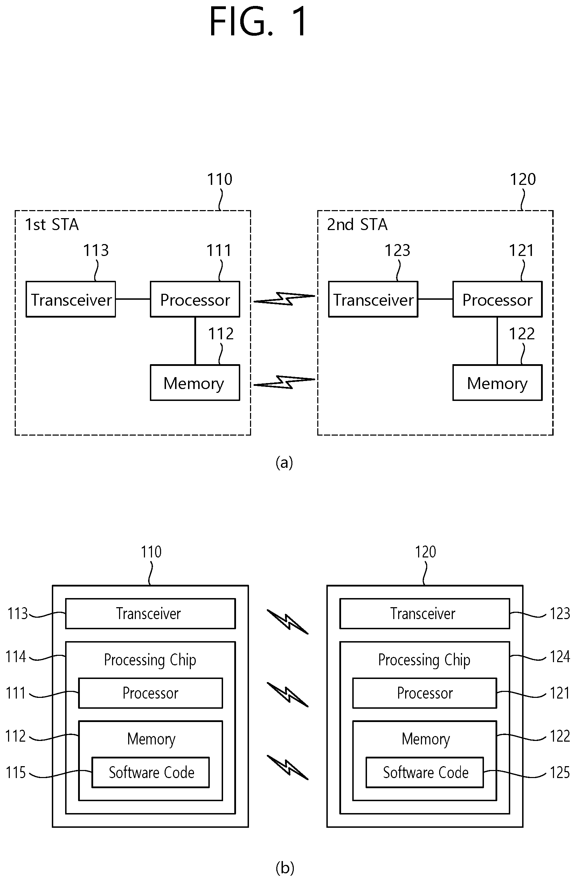

FIG. 1 shows an example of a transmitting apparatus and/or receiving apparatus of the present specification.

In the example of FIG. 1, various technical features described below may be performed. FIG. 1 relates to at least one station (STA). For example, STAs 110 and 120 of the present specification may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present specification m ay also be called in various terms such as a network, a base station, a node-B, an access point (AP), a repeater, a router, a relay, or the like. The STAs 110 and 120 of the present specification may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present specification may serve as the AP and/or the non-AP.

The STAs 110 and 120 of the present specification may support various communication standards together in addition to the IEEE 802.11 standard. For example, a communication standard (e.g., LTE, LTE-A, 5G NR standard) or the like based on the 3GPP standard may be supported. In addition, the STA of the present specification may be implemented as v arious devices such as a mobile phone, a vehicle, a personal computer, or the like. In addition, the STA of the present specification may su pport communication for various communication services such as voice calls, video calls, data communication, and self-driving (autonomous-driving), or the like.

The STAs 110 and 120 of the present specification may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non -AP STA may store a signal (e.g., RX signal) received through the transceiver 123, and may store a signal (e.g., TX signal) to be transmitted through the transceiver.

For example, an operation of a device indicated as an AP in the specification described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 1 20. In addition, control information related to the operation of the AP or a TX/RX signal of the AP may be stored in the memory 122 of the second STA 120.

For example, in the specification described below, an operation of a device indicated as a non -AP (or user-STA) may be performed in the first STA 110 or the second STA 120. For example, if the second STA 120 is the non -AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non -AP or a TX/RX signal of the non-AP may be stored in the memory 112 of the first STA 110.

In the specification described below, a device called a (transmitting/receiving) STA, a first STA, a second STA, a STA1, a STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present specification will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present specification may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application -specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present specification, an uplink may imply a link for communication from a non -AP STA to an SP STA, and an uplink PPDU/packet/signal or the like may be transmitted through the uplink. In addition, in the present specification, a downlink may imply a link for communication from the AP STA to the non-AP STA, and a downlink PPDU/packet/signal or the like may be transmitted through the downlink.

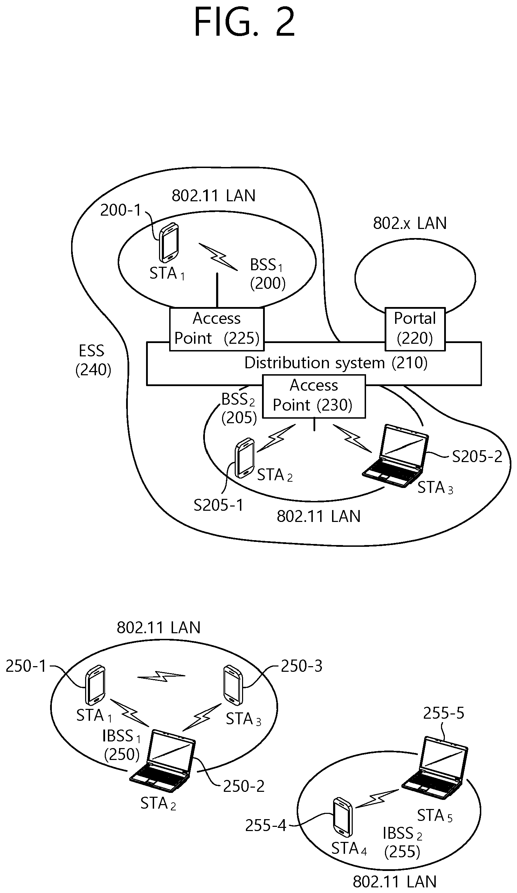

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and a STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

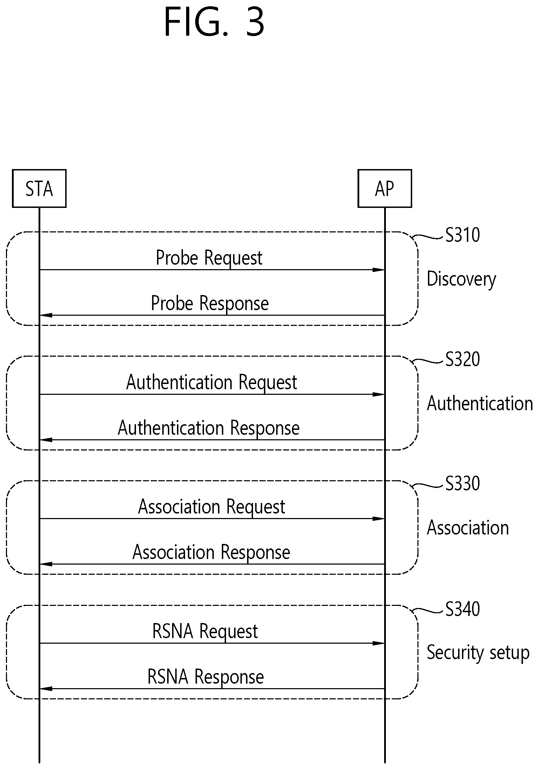

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically tran smit a beacon frame. In an IBSS, STAs in the IBSS transmit a beacon frame in turns. Upon receiving the beacon frame, the STA performing scanning stores information related to a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information related to an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information related to various capabilities, a beacon listen interval, a service set identifier (SSID), a supported rate, a supported channel, RSN, a mobility domain, a supported operating class, a traffic indication map (TIM) broadcast request, and an interworking service capability . The association response frame may include, for example, information related to various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

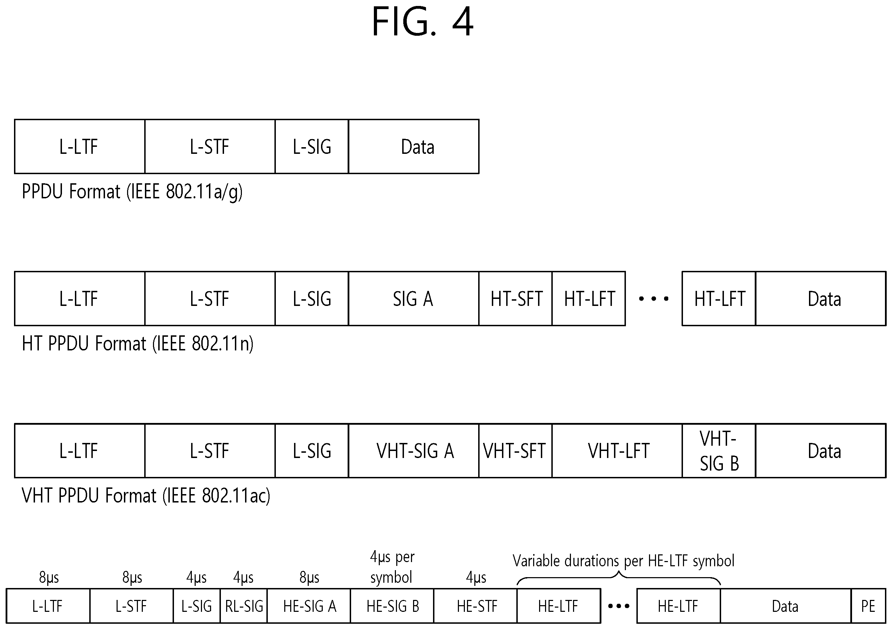

FIG. 4 illustrates an example of a PPDU used in an IEEE standard.

As illustrated, various types of PHY protocol data units (PPDUs) are used in IEEE a/g/n/ac standards. Specifically, an LTF and a STF include a training signal, a SIG-A and a SIG-B include control information for a receiving STA, and a data field includes user data corresponding to a PSDU (MAC PDU/aggregated MAC PDU).

FIG. 4 also includes an example of an HE PPDU according to IEEE 802.11ax. The HE PPDU according to FIG. 4 is an illustrative PPDU for multiple users. An HE-SIG-B may be included only in a PPDU for multiple users, and an HE-SIG-B may be omitted in a PPDU for a single user.

As illustrated in FIG. 4, the HE-PPDU for multiple users (MUs) may include a legacy-short training field (L-STF), a legacy-long training field (L-LTF), a legacy-signal (L-SIG), a high efficiency-signal A (HE-SIG A), a high efficiency-signal-B (HE-SIG B), a high efficiency-short training field (HE-STF), a high efficiency-long training field (HE-LTF), a data field (alternatively, an MAC payload), and a packet extension (PE) field. The respective fields may be transmitted for illustrated time periods (i.e., 4 or 8 µs).

Hereinafter, a resource unit (RU) used for a PPDU is described. An RU may include a plurality of subcarriers (or tones). An RU may be used to transmit a signal to a plurality of STAs according to OFDMA. Further, an RU may also be defined to transmit a signal to one STA. An RU may be used for an STF, an LTF, a data field, or the like.

The RU described in the present specification may be used in uplink (UL) communication and downlink (DL) communication. For example, when UL-MU communication which is solicited by a trigger frame is performed, a transmitting STA (e.g., an AP) may allocate a first RU (e.g., 26/52/106/242-RU, etc.) to a first STA through the trigger frame, and may allocate a second RU (e.g., 26/52/106/242-RU, etc.) to a second STA. Thereafter, the first STA may transmit a first trigger-based PPDU based on the first RU, and the second STA may transmit a second trigger-based PPDU based on the second RU. The first/second trigger-based PPDU is transmitted to the AP at the same (or overlapped) time period.

For example, when a DL MU PPDU is configured, the transmitting STA (e.g., AP) may allocate the first RU (e.g., 26/52/106/242-RU. etc.) to the first STA, and may allocate the second RU (e.g., 26/52/106/242-RU, etc.) to the second STA. That is, the transmitting STA (e.g., AP) may transmit HE-STF, HE-LTF, and Data fields for the first STA through the first RU in one MU PPDU, and may transmit HE-STF, HE-LTF, and Data fields for the second STA through the second RU.

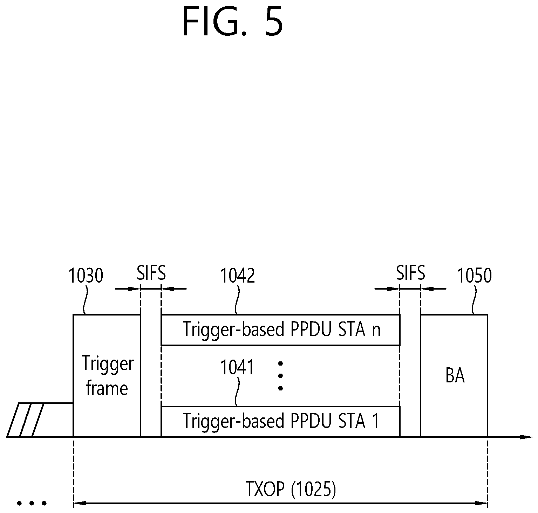

FIG. 5 illustrates an operation based on UL-MU. As illustrated, a transmitting STA (e.g., an AP) may perform channel access through contending (e.g., a backoff operation), and may transmit a trigger frame 1030. That is, the transmitting STA may transmit a PPDU including the trigger frame 1030. Upon receiving the PPDU including the trigger frame, a trigger-based (TB) PPDU is transmitted after a delay corresponding to SIFS.

TB PPDUs 1041 and 1042 may be transmitted at the same time period, and may be transmitted from a plurality of STAs (e.g., user STAs) having AIDs indicated in the trigger frame 1030. An ACK frame 1050 for the TB PPDU may be implemented in various forms.

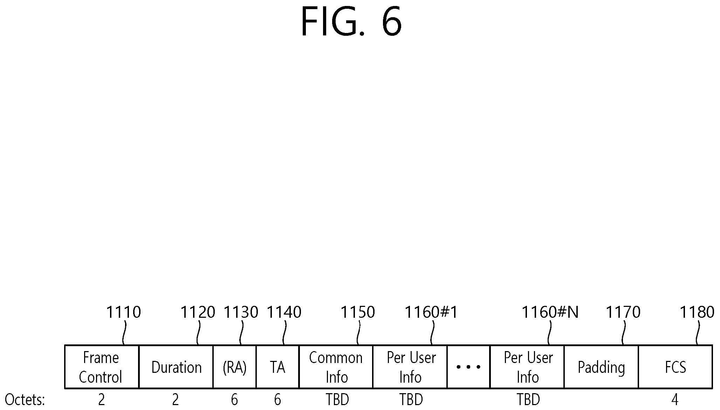

A specific feature of the trigger frame is described with reference to FIG. 6 to FIG. 8. Even if UL-MU communication is used, an orthogonal frequency division multiple access (OFDMA) scheme or a MU MIMO scheme may be used, and the OFDMA and MU-MIMO schemes may be simultaneously used.

FIG. 6 illustrates an example of a trigger frame. The trigger frame of FIG. 6 allocates a resource for uplink multiple-user (MU) transmission, and may be transmitted, for example, from an AP. The trigger frame may be configured of a MAC frame, and may be included in a PPDU.

Each field shown in FIG. 6 may be partially omitted, and another field may be added. In addition, a length of each field may be changed to be different from that shown in the figure.

A frame control field 1110 of FIG. 6 may include information related to a MAC protocol version and extra additional control information. A duration field 1120 may include time information for NAV configuration or information related to an identifier (e.g., AID) of a STA.

In addition, an RA field 1130 may include address information of a receiving STA of a corresponding trigger frame, and may be optionally omitted. A TA field 1140 may include address information of a STA (e.g., an AP) which transmits the corresponding trigger frame. A common information field 1150 includes common control information applied to the receiving STA which receives the corresponding trigger frame. For example, a field indicating a length of an L-SIG field of an uplink PPDU transmitted in response to the corresponding trigger frame or information for controlling content of a SIG-A field (i.e., HE-SIG-A field) of the uplink PPDU transmitted in response to the corresponding trigger frame may be included. In addition, as common control information, information related to a length of a CP of the uplink PPDU transmitted in response to the corresponding trigger frame or information related to a length of an LTF field may be included.

In addition, per user information fields 1160#1 to 1160#N corresponding to the number of receiving STAs which receive the trigger frame of FIG. 6 are preferably included. The per user information field may also be called an "allocation field".

In addition, the trigger frame of FIG. 6 may include a padding field 1170 and a frame check sequence field 1180.

Each of the per user information fields 1160#1 to 1160#N shown in FIG. 6 may include a plurality of subfields.

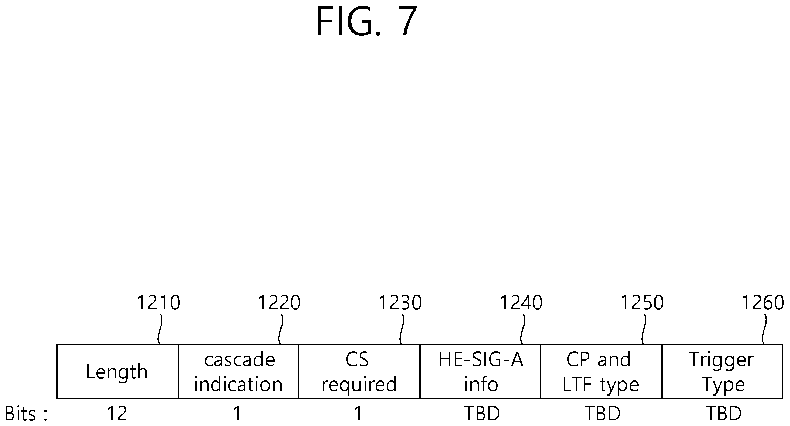

FIG. 7 illustrates an example of a common information field of a trigger frame. A subfield of FIG. 7 may be partially omitted, and an extra subfield may be added. In addition, a length of each subfield illustrated may be changed.

A length field 1210 illustrated has the same value as a length field of an L-SIG field of an uplink PPDU transmitted in response to a corresponding trigger frame, and a length field of the L-SIG field of the uplink PPDU indicates a length of the uplink PPDU. As a result, the length field 1210 of the trigger frame may be used to indicate the length of the corresponding uplink PPDU.

In addition, a cascade identifier field 1220 indicates whether a cascade operation is performed. The cascade operatio n implies that downlink MU transmission and uplink MU transmission are performed together in the same TXOP. That is, it implies that downlink MU transmission is performed and thereafter uplink MU transmission is performed after a pre-set time (e.g., SIFS). During the cascade operation, only one transmitting device (e.g., AP) may perform downlink communication, and a plurality of transmitting devices (e.g., non-APs) may perform uplink communication.

A CS request field 1230 indicates whether a wireless medium state or a NAV or the like is necessarily considered in a situation where a receiving device which has received a corresponding trigger frame transmits a corresponding uplink PPDU.

An HE-SIG-A information field 1240 may include information for controlling content of a SIG-A field (i.e., HE-SIG-A field) of the uplink PPDU in response to the corresponding trigger frame.

A CP and LTF type field 1250 may include information related to a CP length and LTF length of the uplink PPDU transmitted in response to the corresponding trigger frame. A trigger type field 1260 may indicate a purpose of using the corresponding trigger frame, for example, typical triggering, triggering for beamforming, a request for block ACK/NACK, or th e like.

It may be assumed that the trigger type field 1260 of the trigger frame in the present specification indicates a trigger frame of a basic type for typical triggering. For example, the trigger frame of the basic type may be referred to as a basic trigger frame.

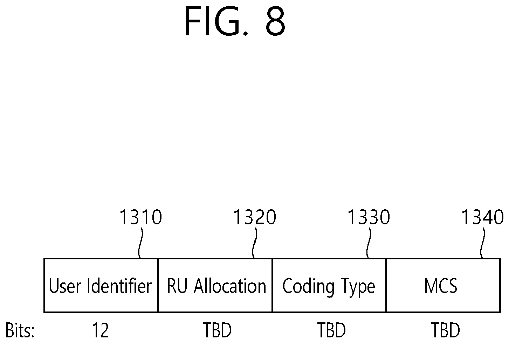

FIG. 8 illustrates an example of a subfield included in a per user information field. A user information field 1300 of FIG. 8 may be understood as any one of the per user information fields 1160#1 to 1160#N mentioned above with reference to FIG. 6. A subfield included in the user information field 1300 of FIG. 8 may be partially omitted, and an extra subfield may be added. In addition, a length of each subfield illustrated may be changed.

A user identifier field 1310 of FIG. 8 indicates an identifier of a STA (i.e., receiving STA) corresponding to per user information. An example of the identifier may be the entirety or part of an association identifier (AID) value of the receiv ing STA.

In addition, an RU allocation field 1320 may be included. That is, when the receiving STA identified through the user identifier field 1310 transmits a TB PPDU in response to the trigger frame, the TB PPDU is transmitted through an RU indicated by the RU allocation field 1320.

The subfield of FIG. 8 may include a coding type field 1330. The coding type field 1330 may indicate a coding type of the TB PPDU. For example, when BCC coding is applied to the TB PPDU, the coding type field 1330 may be set to '1', and when LDPC coding is applied, the coding type field 1330 may be set to '0'.

In addition, the subfield of FIG. 8 may include an MCS field 1340. The MCS field 1340 may indicate an MCS scheme applied to the TB PPDU. For example, when BCC coding is applied to the TB PPDU, the coding type field 1330 may be set to '1', and when LDPC coding is applied, the coding type field 1330 may be set to '0'.

Hereinafter, a UL OFDMA-based random access (UORA) scheme will be described.

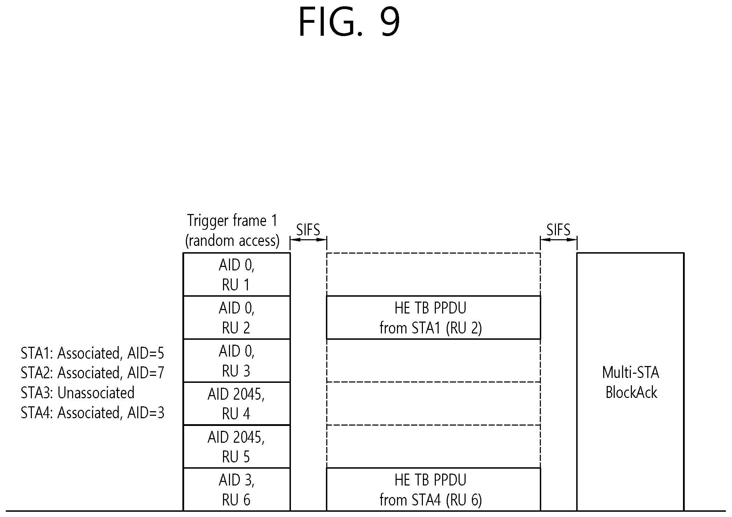

FIG. 9 describes a technical feature of the UORA scheme.

A transmitting STA (e.g., an AP) may allocate six RU resources through a trigger frame as shown in FIG. 9. Specifically, the AP may allocate a 1st RU resource (AID 0, RU 1), a 2nd RU resource (AID 0, RU 2), a 3rd RU resource (AID 0, RU 3), a 4th RU resource (AID 2045, RU 4), a 5th RU resource (AID 2045, RU 5), and a 6th RU resource (AID 3, RU 6). Information related to the AID 0, AID 3, or AID 2045 may be included, for example, in the user identifier field 1310 of FIG. 8. Information related to the RU 1 to RU 6 may be included, for example, in the RU allocation field 1320 of FIG. 8. AID=0 may imply a UORA resource for an associated STA, and AID=2045 may imply a UORA resource for an un-associated STA. Accordingly, the 1st to 3rd RU resources of FIG. 9 may be used as a UORA resource for the associated STA, the 4th and 5th RU resources of FIG. 9 may be used as a UORA resource for the un-associated STA, and the 6th RU resource of FIG. 9 may be used as a typical resource for UL MU.

In the example of FIG. 9, an OFDMA random access backoff (OBO) of a STA1 is decreased to 0, and the STA1 randomly selects the 2nd RU resource (AID 0, RU 2). In addition, since an OBO counter of a STA2/3 is greater than 0, an uplink resource is not allocated to the STA2/3. In addition, regarding a STA4 in FIG. 9, since an AID (e.g., AID=3) of the STA4 is included in a trigger frame, a resource of the RU 6 is allocated without backoff.

Specifically, since the STA1 of FIG. 9 is an associated STA, the total number of eligible RA RUs for the STA1 is 3 (RU 1, RU 2, and RU 3), and thus the STA1 decreases an OBO counter by 3 so that the OBO counter becomes 0. In addition, since the STA2 of FIG. 9 is an associated STA, the total number of eligible RA RUs for the STA2 is 3 (RU 1, RU 2, and RU 3), and thus the STA2 decreases the OBO counter by 3 but the OBO counter is greater than 0. In addition, since the STA3 of FIG. 9 is an un-associated STA, the total number of eligible RA RUs for the STA3 is 2 (RU 4, RU 5), and thus the STA3 decreases the OBO counter by 2 but the OBO counter is greater than 0.

Hereinafter, a PPDU transmitted/received in a STA of the present specification will be described.

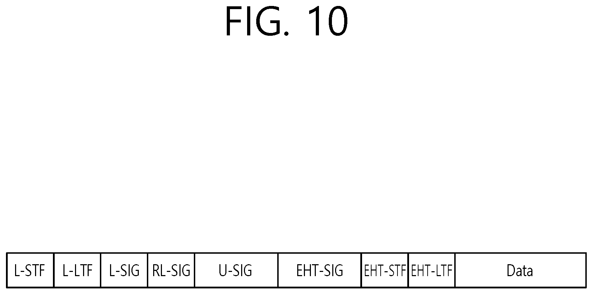

FIG. 10 illustrates an example of a PPDU used in the present specification.

The PPDU of FIG. 10 may be called in various terms such as an EHT PPDU, a TX PPDU, an RX PPDU, a first type or N-th type PPDU, or the like. For example, in the present specification, the PPDU or the EHT PPDU may be called in various terms such as a TX PPDU, a RX PPDU, a first type or N-th type PPDU, or the like. In addition, the EHT PPDU may be used in an EHT system and/or a new WLAN system enhanced from the EHT system.

The PPDU of FIG. 10 may indicate the entirety or part of a PPDU type used in the EHT system. For example, the example of FIG. 10 may be used for both of a single-user (SU) mode and a multi-user (MU) mode. In other words, the PPDU of FIG. 10 may be a PPDU for one receiving STA or a plurality of receiving STAs. When the PPDU of FIG. 10 is used for a trigger - based (TB) mode, the EHT-SIG of FIG. 10 may be omitted. In other words, an STA which has received a trigger frame for uplink-MU (UL-MU) may transmit the PPDU in which the EHT-SIG is omitted in the example of FIG. 10.

In FIG. 10, an L-STF to an EHT-LTF may be called a preamble or a physical preamble, and may be generated/transmitted/received/obtained/decoded in a physical layer.

A subcarrier spacing of the L-STF, L-LTF, L-SIG, RL-SIG, U-SIG, and EHT-SIG fields of FIG. 10 may be determined as 312.5 kHz, and a subcarrier spacing of the EHT-STF, EHT-LTF, and Data fields may be determined as 78.125 kHz. That is, a tone index (or subcarrier index) of the L-STF, L-LTF, L-SIG, RL-SIG, U-SIG, and EHT-SIG fields may be expressed in unit of 312.5 kHz, and a tone index (or subcarrier index) of the EHT-STF, EHT-LTF, and Data fields may be expressed in unit of 78.125 kHz.

In the PPDU of FIG. 10, the L-LTE and the L-STF may be the same as those in the conventional fields.

The L-SIG field of FIG. 10 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non -HT, HT, VHT PPDU or an EHT PPDU, a value of the length field may be determined as a multiple of 3. For example, when the PPDU is an HE PPDU, the value of the length field may be determined as "a multiple of 3"+1 or "a multiple of 3"+2. In other words, for the n on-HT, HT, VHT PPDI or the EHT PPDU, the value of the length field may be determined as a multiple of 3, and for the HE PPDU, the value of the length field may be determined as "a multiple of 3"+1 or "a multiple of 3"+2.

For example, the transmitting STA may apply BCC encoding based on a 1/2 coding rate to the 24 -bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation on a frequency domain corresponding to {-28, -27, +27, +28}.

The transmitting STA may generate an RL-SIG generated in the same manner as the L-SIG. BPSK modulation may be applied to the RL-SIG. The receiving STA may know that the RX PPDU is the HE PPDU or the EHT PPDU, based on the presence of the RL-SIG.

A universal SIG (U-SIG) may be inserted after the RL-SIG of FIG. 10. The U-SIB may be called in various terms such as a first SIG field, a first SIG, a first type SIG, a control signal, a control signal field, a first (type) control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4 µs. Each symbol of the U-SIG may be used to transmit the 26-bit information. For example, each symbol of the U-SIG may be transmitted/received based on 52 data tomes and 4 pilot tones.

Through the U-SIG (or U-SIG field), for example, A-bit information (e.g., 52 un-coded bits) may be transmitted. A first symbol of the U-SIG may transmit first X-bit information (e.g., 26 un-coded bits) of the A-bit information, and a second symbol of the U-SIB may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52 -coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, "000000".

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits may indicate that the TX/RX PPDU is an EHT PPDU. In other words, when the transmitting STA transmits the EHT PPDU, the PHY version identifier of 3 bits may be set to a first value. In other words, th e receiving STA may determine that the RX PPDU is the EHT PPDU, based on the PHY version identifier having the first value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a TXOP length and information related to a BSS color ID.

For example, when the EHT PPDU is divided into various types (e.g., various types such as an EHT PPDU related to an SU mode, an EHT PPDU related to a MU mode, an EHT PPDU related to a TB mode, an EHT PPDU related to extended range transmission, or the like), information related to the type of the EHT PPDU may be included in the version -dependent bits of the U-SIG.

For example, the U-SIG may include: 1) a bandwidth field including information related to a bandwidth; 2) a field including information related to an MCS scheme applied to EHT-SIG; 3) an indication field including information regarding whether a dual subcarrier modulation (DCM) scheme is applied to EHT-SIG; 4) a field including information related to the number of symbol used for EHT-SIG; 5) a field including information regarding whether the EHT-SIG is generated across a full band; 6) a field including information related to a type of EHT-LTF/STF; and 7) information related to a field indicating an EHT-LTF length and a CP length.

In the following example, a signal represented as a (TX/RX/UL/DL) signal, a (TX/RX/UL/DL) frame, a (TX/RX/UL/DL) packet, a (TX/RX/UL/DL) data unit, (TX/RX/UL/DL) data, or the like may be a signal transmitted/received based on the PPDU of FIG. 10. The PPDU of FIG. 10 may be used to transmit/receive frames of various types. For example, the PPDU of FIG. 10 may be used for a control frame. An example of the control frame may include a request to send (RTS), a clear to send (CTS), a power save-poll (PS-poll), BlockACKReq, BlockAck, a null data packet (NDP) announcement, and a trigger frame. For example, the PPDU of FIG. 10 may be used for a management frame. An example of the management frame may include a beacon frame, a (re-)association request frame, a (re-)association response frame, a probe request frame, and a probe response frame. For example, the PPDU of FIG. 10 may be used for a data frame. For example, the PPDU of FIG. 10 may be used to simultaneously transmit at least two or more of the control frames, the management frame, and the data frame.

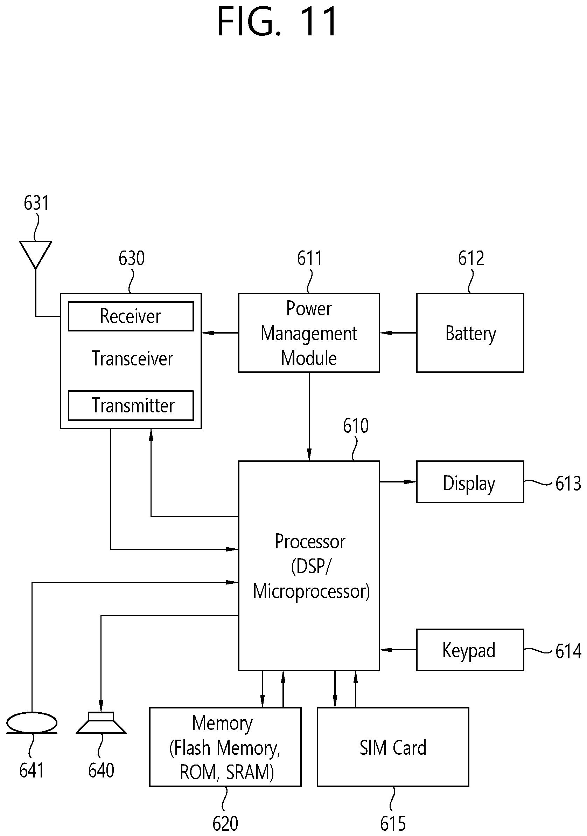

FIG. 11 illustrates an example of a modified transmission device and/or receiving device of the present specification.

Each device/STA of the sub-figure (a)/(b) of FIG. 1 may be modified as shown in FIG. 11. A transceiver 630 of FIG. 11 may be identical to the transceivers 113 and 123 of FIG. 1. The transceiver 630 of FIG. 11 may include a receiver and a transmitter.

A processor 610 of FIG. 11 may be identical to the processors 111 and 121 of FIG. 1. Alternatively, the processor 610 of FIG. 11 may be identical to the processing chips 114 and 124 of FIG. 1.

A memory 620 of FIG. 11 may be identical to the memories 112 and 122 of FIG. 1. Alternatively, the memory 620 of FIG. 11 may be a separate external memory different from the memories 112 and 122 of FIG. 1.

Referring to FIG. 11, a power management module 611 manages power for the processor 610 and/or the transceiver 630. A battery 612 supplies power to the power management module 611. A display 613 outputs a result processed by the processor 610. A keypad 614 receives inputs to be used by the processor 610. The keypad 614 may be displayed on the display 613. A SIM card 615 may be an integrated circuit which is used to securely store an international mobile subscriber identity (IMSI) and its related key, which are used to identify and authenticate subscribers on mobile telephony devices such as mobile phones and computers.

Referring to FIG. 11, a speaker 640 may output a result related to a sound processed by the processor 610. A microphone 641 may receive an input related to a sound to be used by the processor 610.

Hereinafter, technical features of multi-link (ML) supported by the STA of the present specification will be described.

STAs (AP and/or non-AP STA) of the present specification may support multi-link (ML) communication. ML communication may mean communication supporting a plurality of links. Links related to ML communication may include channels (e.g., 20/40/80/160/240/320 MHz channels) of the 2.4 GHz band, the 5 GHz band, and the 6 GHz band.

A plurality of links used for ML communication may be set in various ways. For example, a plurality of links supported by one STA for ML communication may be a plurality of channels in the 2.4 GHz band, a plurality of channels in the 5 GHz band, and a plurality of channels in the 6 GHz band. Alternatively, a plurality of links may be a combination of at least one channel within the 2.4 GHz band (or 5 GHz/6 GHz band) and at least one channel within the 5 GHz band (or 2.4 GHz/6 GHz band). Meanwhile, at least one of a plurality of links supported by one STA for ML communication may be a chan nel to which preamble puncturing is applied.

The STA may perform ML setup to perform ML communication. ML setup may be performed based on management frames or control frames such as Beacon, Probe Request/Response, and Association Request/Response. For example, information on ML setup may be included in element fields included in Beacon, Probe Request/Response, and Association Request/Response.

When ML setup is completed, an enabled link for ML communication may be determined. The STA may perform frame exchange through at least one of a plurality of links determined as an enabled link. For example, an enabled link may be used for at least one of a management frame, a control frame, and a data frame.

When one STA supports a plurality of Links, a transmitting/receiving device supporting each Link may operate like one logical STA. For example, one STA supporting two links may be expressed as one ML device (Multi Link Device; MLD) including a first STA for a first link and a second STA for a second link. For example, one AP supporting two links may be expressed as one AP MLD including a first AP for a first link and a second AP for a second link. In addition, one non -AP supporting two links may be expressed as one non-AP MLD including a first STA for the first link and a second STA for the second link.

More specific features of the ML setup are described below.

An MLD (AP MLD and/or non-AP MLD) may transmit information about a link that the corresponding MLD can support through ML setup. Link-related information may be configured in various ways. For example, link-related information includes at least one of 1) information on whether the MLD (or STA) supports simultaneous RX/TX operation, 2) information on the number/upper limit of uplink/downlink links supported by the MLD (or STA), 3) information on the location/band/resource of uplink/downlink link supported by MLD (or STA), 4) type of frame available or preferred in at least one uplink/downlink link (management, control, data etc.), 5) available or preferred ACK policy information on at least one uplink/downlink link, and 6) information on available or preferred TID (traffic identifier) on at least one uplink/downlink link. The TID is related to the priority of traffic data and is represented by 8 types of values according to the conventional wireless LAN standard. That is, 8 TID values corresponding to 4 access categories (AC) (AC_BK (background), AC_BE (best effort), AC_VI (video), AC_VO (voice)) according to the conventional wireless LAN standard may be defined.

For example, it may be set in advance that all TIDs are mapped for uplink/downlink links. Specifically, if negotiation is not done through ML setup, all TIDs may be used for ML communication, and if mapping between uplink/downlink links and TIDs is negotiated through additional ML setup, the negotiated TIDs may be used for ML communication.

A plurality of links that can be used by the transmitting MLD and the receiving MLD related to ML communication can be set through ML setup, and this can be called an enabled link. The enabled link can be called differently in a variety of ways. For example, it may be called various expressions such as a first link, a second link, a transmitting link, and a receiving link.

After the ML setup is complete, the MLD may update the ML setup. For example, the MLD may transmit information about a new link when updating information about a link is required. Information about the new link may be transmitted based on at least one of a management frame, a control frame, and a data frame.

The device described below may be the apparatus of FIGS. 1 and/or 11, and the PPDU may be the PPDU of FIG. 10. A device may be an AP or a non-AP STA. A device described below may be an AP multi-link device (MLD) or a non-AP STA MLD supporting multi-link.

In EHT (extremely high throughput), a standard being discussed after 802.11ax, a multi-link environment in which one or more bands are simultaneously used is considered. When a device supports multi-link, the device can simultaneously or alternately use one or more bands (e.g., 2.4 GHz, 5 GHz, 6 GHz, 60 GHz, etc.).

In the following specification, MLD means a multi-link device. The MLD has one or more connected STAs and has one MAC service access point (SAP) that communicates with the upper link layer (Logical Link Control, LLC). MLD may mean a physical device or a logical device. Hereinafter, a device may mean an MLD.

In the following specification, a transmitting device and a receiving device may mean MLD. The first link of the receiving/transmitting device may be a terminal (e.g., STA or AP) included in the receiving/transmitting device and performing signal transmission/reception through the first link. The second link of the receiving/transmitting device may be a terminal (e.g., STA or AP) that transmits/receives a signal through the second link included in the receiving/transmitting device.

In IEEE802.11be, two types of multi-link operations can be supported. For example, simultaneous transmit and receive (STR) and non-STR operations may be considered. For example, STR may be referred to as asynchronous multi-link operation, and non-STR may be referred to as synchronous multi-link operation. Multi-links may include multi-bands. That is, multi-links may mean links included in several frequency bands or may mean multiple links included in one frequency band.

EHT (11be) considers multi-link technology, where multi-link may include multi-band. That is, multi-link can represent links of several bands and multiple multi-links within one band at the same time. Two major multi-link operations are being considered. Asynchronous operation, which enables TX/RX simultaneously on several links, and synchronous operation, which is not possible, are being considered. Hereinafter, a capability that enables simultaneous reception and transmission on multiple links is referred to as STR (simultaneous transmit and receive), an STA having STR capability is referred to as STR MLD (multi-link device), and an STA that does not have STR capability is referred to as a non -STRMLD.

In the following specification, for convenience of explanation, it is described that the MLD (or the processor of the MLD) controls at least one STA, but is not limited thereto. As described above, the at least one STA may transmit and receive signals independently regardless of MLD.

According to an embodiment, an AP MLD or a non-AP MLD may have a structure having a plurality of links. In other words, a non-AP MLD can support multiple links. A non-AP MLD may include a plurality of STAs. A plurality of STAs may have Link for each STA.

In the EHT standard (802.11be standard), the MLD (Multi-Link Device) structure in which one AP/non-AP MLD supports multiple links is considered as a major technology. STAs included in the non -AP MLD may transmit information about other STAs in the non-AP MLD together through one link. Accordingly, there is an effect of reducing the overhead of frame exchange. In addition, there is an effect of increasing the link use efficiency of the STA and reducing power consumption.

Here, multi-link may include multi-band. That is, multi-link can represent links of several bands and multiple multi-links within one band at the same time.

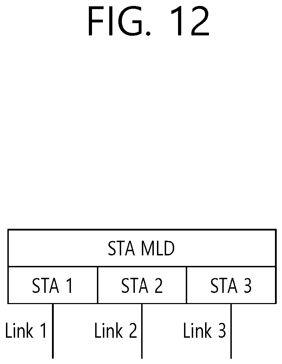

FIG. 12 shows an example of a structure of a STA MLD.

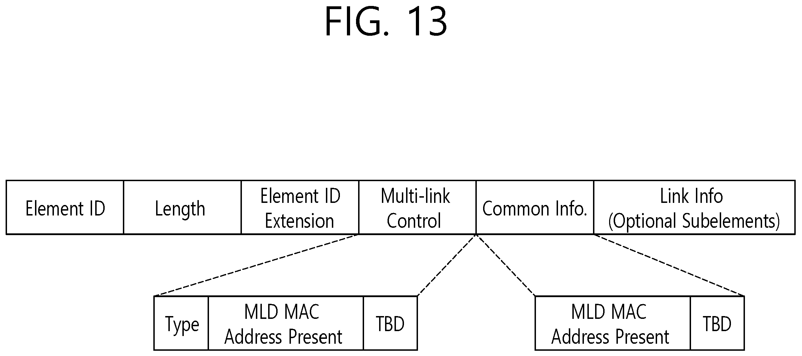

FIG. 12 shows an example in which one STA MLD has three links. In 802.11be, for multi-link setup (that is, to simultaneously associate (setup) multiple links through Association frame exchange in one link), one STA in the STA MLD must provide information on one or more links in addition to its own link. In order to provide this information, the Multi-Link element was defined, and the basic structure of the Multi-Link element is shown in Figure 13.

The order, name, and size of the fields shown in FIG. 13 may change and may exist as additional fields. Basically, Common info means common information between STAs in the MLD, and specific information on each STA is indicated in the Per-STA Profile.

FIG. 13 illustrates structures of a Multi-link Control field and a Common Info field of a Multi-link Element.

The upper side of FIG. 13 represents a Multi-Link element, and the Multi-Link element includes Element ID, Length, Element ID Extension, Multi-Link Control, Common Info, and Link Info fields.

Referring to FIG. 13, the Multi-link Control field includes a Type subfield and an MLD MAC Address Present subfield. The Type subfield is used to distinguish variants of the Multi-Link element. Various variants of the Multi-Link element are used for various multi-link operations. The format of each variant of the Multi-Link element is as follows.

**[Table 1]**

| Type subfield value | Multi-Link element variant name |
|---|---|
| 0 | Basic Multi-Link element |
| 1 | Probe Request Multi-Link element |
| 2 | (ML) Reconfiguration Multi-Link element |
| 3 | TDLS(Tunneled Direct Link Setup) Multi-Link element |
| 4 | Priority Access Multi-Link element |
| 5-7 | Reserved |

Referring to Table 1 above, the type of ML IE is defined through the Type subfield of the Multi-Link Control field of ML IE. When the value of the Type subfield is 0, the ML IE indicates Basic variant Multi-Link element, when the value of the Type subfield is 1, the ML IE indicates Probe Request variant Multi-Link element, and when the value of the Type subfield is 2, the ML IE indicates ML Reconfiguration variant Multi-Link element.

Referring to FIG. 13, the Common Info field refers to common information between STAs in the MLD, and specific information for each STA is indicated in the Per-STA Profile in the Link Info field.

The Common Info field includes the MLD MAC Address subfield. If the MLD MAC Address Present subfield is set to 1 (or 0), the MAC addresses of STAs in the MLD may be included in the MLD MAC Address subfield.

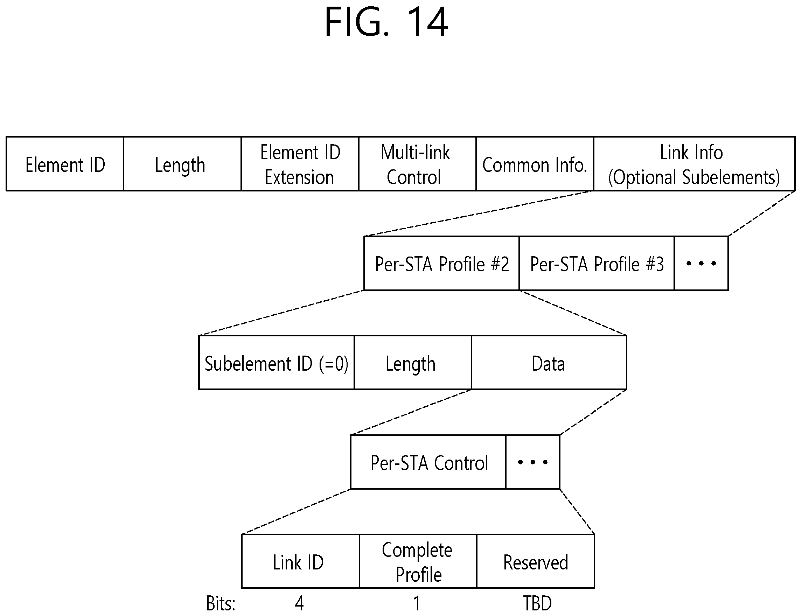

FIG. 14 shows the structure of the Link Info field of Multi-link Element.

Referring to FIG. 14, the Link Info field includes a Per-STA Profile subfield when the Optional subelement ID is 0, and a Vendor Specific subfield when the Optional subelement ID is 221. Optional subelement IDs for multi-link elements are defined as follows.

**[Table 2]**

| Subelement ID | Name | Extensible |
|---|---|---|
| 0 | Per-STA Profile | Yes |
| 1-220 | Reserved | |
| 221 | Vendor Specific | Vendor defined |
| 222-255 | Reserved | |

The Link Info field includes a Per-STA Profile subfield for other STAs (STAs operating on the non-association link) within the same MLD. Referring to FIG. 14, assuming that STA MLD includes STA 2 and STA 3, the Link Info field may include a Per-STA Profile #2 subfield for STA 2 and a Per-STA Profile #3 subfield for STA 3.

The Probe Request variant Multi-Link element (when the value of the Type subfield is 1) is a Multi-Link element structure used when requesting information from the AP about other APs of the same AP MLD as the AP MLD that includes the AP. The Probe Request frame including ML IE is called ML probe request.

Currently, in 802.11be, when frame types (e.g. (re)Association Request frame, (re)Association Probe Response frame, Probe Response frame, etc.) other than ML probe request include ML IE, Multi-link Element including Basic variant Multi-Link element is defined.

If an AP sends a message containing information about other APs, and the information about other APs is a transmitted BSSID (Basic Service Set IDentifier) set, this information can be delivered to the non-AP STA through a Beacon or Probe Response frame as a Multi-Link element (i.e. Basic variant Multi-Link element).

If the information of other APs transmitted through the message corresponds to a nontransmitted BSSID, this information can be delivered to the non-AP STA through a Beacon or Probe Response frame to the Multi-Link element (i.e. Basic variant Multi-Link element) included in the nontransmitted BSSID profile of the Multiple BSSID element.

In this specification, when a non-AP STA requests partial information about other APs, the case where the requested other AP is not only the transmitted BSSID set but also the nontransmitted BSSID set is considered, and this specification also proposes a method for signaling this request message and a method for the AP that receives it to respond.

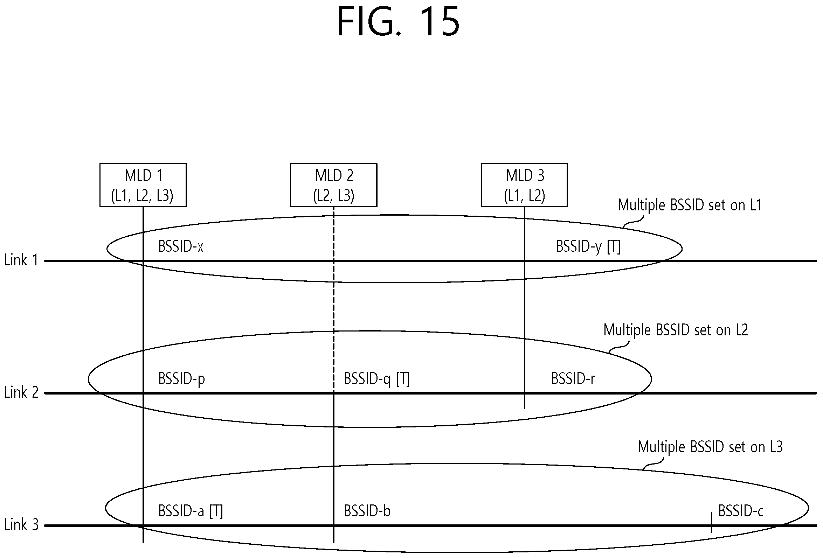

FIG. 15 shows an example of multiple BSSID sets on all links in a Multi-Link configuration.

A method for distinguishing multiple BSSID set, transmitted BSSID set, and nontransmitted BSSID set can be explained through FIG. 15.

Referring to FIG. 15, APs belonging to the same multiple BSSID set configured for a link (or channel) do not belong to the same AP MLD.

FIG. 15 shows an example where an AP connected to the AP MLD belongs to the multiple BSSID set of the corresponding channel. Additionally, APs within the same AP MLD may correspond to transmitted BSSID or nontransmitted BSSID.

FIG. 15 shows that APs corresponding to BSSID-x and BSSID-y belonging to the same multiple BSSID set configured in Link1 are connected to different AP MLDs (MLD 1 and MLD 3). In Link1, AP-y connected to MLD 3 corresponds to the transmitted BSSID (indicated as BSSID-y) for the multiple BSSID set for Link1.

In Link2, there are three APs belonging to the same multiple BSSID set, and each AP is connected to a different AP MLD. AP-q connected to MLD2 corresponds to the transmitted BSSID (displayed as BSSID-q) for the multiple BSSID set set in Link2.

In Link3, there are three APs belonging to the same multiple BSSID set, and two of these APs are connected to two different MLDs. AP-a connected to MLD1 corresponds to the transmitted BSSID (displayed as BSSID-a) for the multiple BSSID set set in Link3. AP-c is not connected to any AP MLD. Each AP MLD independently assigns a link ID to the connected AP.

Referring to FIG. 15, the multiple BSSID set for Link1 includes BSSID-x and BSSID-y. The multiple BSSID set for Link2 includes BSSID-p, BSSID-q, and BSSID-r. The multiple BSSID set for Link3 includes BSSID-a, BSSID-b, and BSSID-c.

For example, if BSSID-p is a transmitted BSSID, the remaining BSSID-q and BSSID-r of the same multiple BSSID set become nontransmitted BSSIDs. Even if an AP with a nontransmitted BSSID receives an ML probe request, it cannot directly transmit an ML probe response. The AP of the transmitted BSSID of the same multiple BSSID set can transmit an ML probe response instead. For example, even if an AP in BSSID-q receives an ML probe request, the AP in BSSID-q cannot directly transmit an ML probe response, and the AP in BSSID-p can transmit an ML probe response instead.

In the Multi-Link Device (MLD) environment of recent wireless LAN systems (802.11), Signaling has been defined for an STA (i.e., non-AP STA) to request information about other APs as well as information about its associated AP. To this end, the STA transmits an ML probe request containing a Multi-link element indicating a request for information about a specific other AP (includes all other APs other than the AP, including other APs within the same AP MLD of the associated AP and APs belonging to the nontransmitted BSSID for the associated AP) to the associated AP. Through this, the STA can obtain key information about other APs through the associated AP.

In particular, 802.11be is discussing signaling definitions to obtain critical update information of other APs. Through this, when the STA of the non-AP MLD recognizes that a Critical update event of other APs has occurred (e.g. When recognizing whether a critical update has occurred by receiving BSS Parameters Change Count subfield value information from other APs through Beacon), it can request information about the updated BSS parameters of other APs through an ML probe request.

At this time, if the STA of the non-AP MLD checks whether a critical update has occurred through the BSS Parameters Change Count value for other APs included in the Beacon, depending on the value, signaling through which the STA requests updated BSS Parameters information for other APs may vary.

In this specification, an optimized ML probe request/response signaling method is defined to reduce overhead by considering these characteristics.

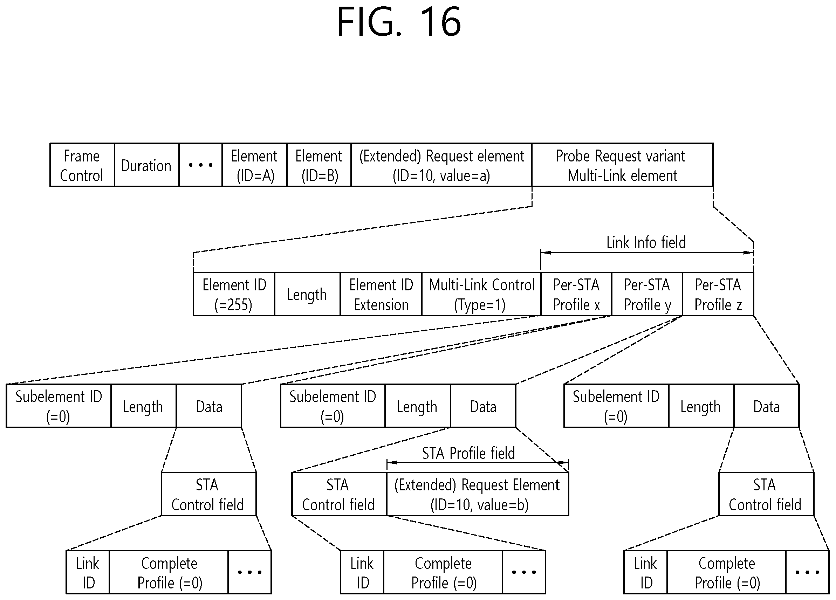

First, an example of the basic structure of an ML probe request (i.e., when the Probe Request frame includes an ML IE) is shown in FIG. 16.

FIG. 16 shows an example of the ML probe request format.

Referring to FIG. 16, the Probe Request Multi-Link element of the ML probe request has a Per-STA Profile for each AP and transmits the requirements for the requesting AP using the Per-STA Profile.

For example, when a non-AP STA requests partial information on AP y, the non-AP STA transmits a Request element indicating the information to be requested in Per-STA Profile y. In this case, since it corresponds to a partial profile request rather than a complete profile, the non-AP STA sets the value of the Complete Profile field to 0 and transmits it.

For example, if a non-AP STA requests complete information on AP z, the Request element is not included in Per-STA Profile z. In this case, since it corresponds to a complete profile request, the non-AP STA sets the value of the Complete Profile field to 1 and transmits it.

In this way, a non-AP STA can request information about not only the AP to which it is connected but also other APs through the Link ID subfield of the STA Control field of the Per-STA Profile subelement of the Probe Request Multi-Link element.

At this time, the AP that received the ML probe request to request partial information about other APs responds with an ML probe response including the elements value requested by the non-AP STA. At this time, the requested information is transmitted within the Per-STA profile subelement corresponding to the requested AP of the Basic variant Multi-Link element included in the ML probe response.

This specification defines a method for STA to obtain updated BSS Parameters information due to Critical update events of other APs. In the 802.11be spec, if a Critical Update event occurs in a specific AP (meaning other AP, not associated AP) for some Critical Update-related information (Channel Switch Announcement element, Extended Channel Switch Announcement element, Max Channel Switch Time element, Quiet element corresponding to quiet intervals other than quiet intervals scheduled to protect restricted TWT service periods(Quieting STAs during restricted TWT service periods), Quiet Channel element), this specification defines a method of transmitting elements updated up to the next DTIM (Delivery Traffic Indicator Map) by including them in a Beacon or Probe Response frame.

According to the definition in the specification, for some elements among the elements classified as Critical Update events, By transmitting the update information generated by the first AP by including it in the Beacon or Probe Response fram e transmitted by the other AP for a certain period of time, the STA that receives this can receive critical update information of other APs (APs other than its associated AP). This can be especially useful when the non-AP MLD is operating in power save mode because other STAs do not need to be awake to receive critical updates from other APs when they occur.

The list defining all elements for Critical update events in TIM Broadcast in the 802.11be spec is as follows. When a critical update occurs for any element within the Beacon frame, the AP must increase the value (modulo 256) of the Check Beacon field in the next transmitted TIM frame. The following events regarding the AP's operating parameters are classified as critical updates.
a) Inclusion of a Channel Switch Announcement element
b) Inclusion of an Extended Channel Switch Announcement element
c) Modification of the EDCA parameters element
d) Inclusion of a Quiet element
e) Modification of the DSSS Parameter Set
f) Modification of the HT Operation element
g) Inclusion of a Wide Bandwidth Channel Switch element
h) Inclusion of a Channel Switch Wrapper element
i) Inclusion of an Operating Mode Notification element
j) Inclusion of a Quiet Channel element
k) Modification of the VHT Operation element
l) Modification of the HE Operation element
m) Insertion of a Broadcast TWT element
n) Inclusion of the BSS Color Change Announcement element
o) Modification of the MU EDCA Parameter Set element
p) Modification of the Spatial Reuse Parameter Set element
q) Modification of the UORA Parameter Set element
r) Modification of the EHT Operation element

In the 802.11be spec, a list of some elements that transmit some critical update information through a Beacon or Probe response frame for a specific period of time in Multi-link procedures for channel switching, extended channel switching, and channel quieting is as follows.
i) Channel Switch Announcement element
ii) Extended Channel Switch Announcement element
iii) Max Channel Switch Time element
iv) Quiet element corresponding to quiet intervals other than quiet intervals scheduled to protect r-TWT SPs
v) Quiet Channel element

In general, when a critical update event occurs in the associated AP, a non-AP STA must receive updated BSS Parameters through probing as critical information. However, if a non-AP STA receives critical update information of a specific AP (i.e., another AP other than the associated AP) through a Beacon or Probe response frame, there may be no need to request additional information.

Currently, 802.11be is discussing ML probing methods for non-AP STAs to receive critical information related to critical updates of other APs. If some STAs in the Non-AP MLD are in a doze or disabled state to save power, and do not receive update information resulting from a critical update for a certain period of time, it can be useful to request updated information on specific AP(s) at once through an ML probe request.

At this time, the STA can request all update information that occurred due to the Critical update event through an ML probe request, and all of this information refers to information from a) to r), which is the previously classified list of elements. At this time, if the STA has already received update information related to some critical updates (i.e., information from i) to v), which is a list of previously classified elements) through a Beacon or Probe response frame, the information may be received repeatedly.

Therefore, in this specification, as the 802.11be spec defines signaling in which some update information related to critical update is included and announced in a Beacon or Probe response frame, additional signaling is defined to reduce overhead due to redundant information transmission.

### 1. Propose signaling for cases where updated BSS parameters of other APs are requested through ML probe request.

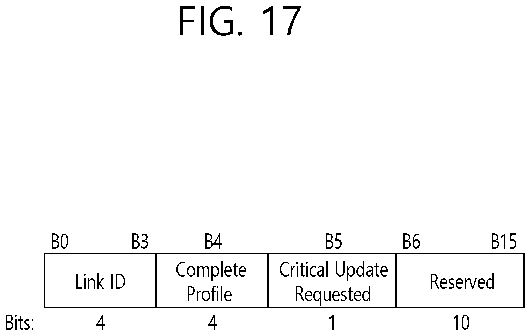

In order for an STA to request updated BSS Parameters information due to a Critical update event of other APs, the STA Control field of the Per-STA Profile subelement of the Probe request ML IE can be defined, as shown in FIG. 17. The STA Control field may be transmitted and included in a per-STA profile corresponding to a specific requested AP.

FIG. 17 shows an example of the structure of the STA Control field included in the per-STA profile of the Probe Request Multi-Link element.

Referring to FIG. 17, the STA Control field includes a Link ID subfield, Complete Profile subfield, Critical Update Requested subfield, and Reserved subfield.

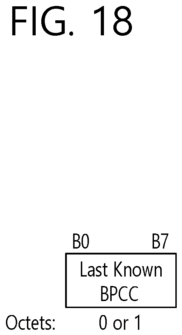

When a non-AP STA requests information related to Critical update through an ML probe request, the Critical Update Requested subfield is set to 1. If a non-AP STA does not request information related to Critical update through an ML probe request, the Critical Update Requested subfield is set to 0. However, when the Critical Update Requested subfield is set to 1 , the Last Known BPCC (BSS (Basic Service Set) Parameters Change Count) subfield must be included in the per-STA profile. The Last Known BPCC subfield is shown in FIG. 18.

FIG. 18 shows an example of the structure of the Last Known BPCC subfield included in the per-STA profile of the Probe Request Multi-Link element.

The Last Known BPCC subfield includes the value (included in the RNR element) of the most recent BPCC subfield received by a non-AP STA (requesting STA) through a Beacon or Probe Response frame. If the Critical Update Requested subfield of the ML probe request is set to 1, the Last Known BPCC subfield is included in the per-STA profile.

If STA (x) requests updated BSS Parameters information for a specific AP (y) (meaning an AP other than the STA's associated AP (x)), STA (x) sets the value of Critical Update Requested in the STA Control field of the per-STA profile corresponding to the requested AP (y) in the Probe request ML IE of the ML probe request to 1, and STA (x) can transmit the Last Known BPCC subfield indicating the most recent BPCC value stored by STA (y) in the per-STA profile (y). The AP (x) that received this compares the Last Known BPCC value included in the delivered per-STA profile (y) with the most recent BPCC value of AP (y), and the AP(x) can transmit updated BSS Parameters information corresponding to the gap of the corresponding value by including it in the per-STA profile (i.e., AP (y)) corresponding to the requested AP of the ML probe response.

For example, if the most recent BPCC value for AP(y) is 4 and the Last Known BPCC value included in the Last Known BPCC subfield of per-STA profile (y) included in the frame requested by STA (x) through ML probe request is 2 (this means that STA (y) has already received critical update information corresponding to BPCC = 2), the AP (x) can contain only updated BSS parameters information that occurred due to a critical update event while the increment is increased by 2 in the per-STA profile corresponding to AP (y) of the ML probe response. The AP (x) may include the most recent information on all elements related to the critical update event and transmit it.

Through this, non-AP STAs may obtain updated information due to critical update events of other APs.

### 2. Proposes optimized signaling for cases where updated BSS parameters of other APs are requested through ML probe request.

This section proposes additional optimized signaling related to ML probing to request updated BSS parameters information of other APs.

As explained earlier, in the current 802.11be standard, when a critical update event occurs, a non-AP STA can receive some update information through a beacon or probe response frame for a certain period of time.

In other words, if the non-AP STA regularly receives this information and if a non-AP STA does not consider this when requesting updated BSS parameters information due to critical update events of other APs through ML probing, the ML probe response may be transmitted with some information already received.

Therefore, this section proposes additional new directives to reduce this overhead.

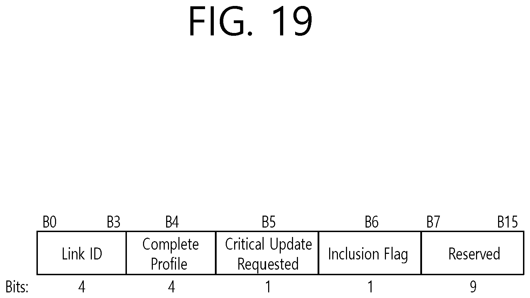

FIG. 19 shows another example of the structure of the STA Control field included in the per-STA profile of the Probe Request Multi-Link element.

Referring to FIG. 19, the STA Control field further includes a Link ID subfield, Complete Profile subfield, Critical Update Requested subfield, and Reserved subfield, as well as an Inclusion Flag subfield.

If a non-AP STA requests Critical update information for the AP corresponding to the per-STA profile (i.e., Critical Update Requested = 1), if the value of the Inclusion Flag subfield is set to 1, the AP that receives this considers the category including all elements (information from a) to r) defined as a critical update event in TIM Broadcast when providing update information through an ML probe response. In other words, when critical updates elements information corresponding to the gap between the Last Known BPCC value received through an ML probe request and the most recent BPCC value of a specific AP is included in the ML probe response, the AP considers all elements (information from a) to r) above for elements as critical updates defined in TIM Broadcast and includes the corresponding elements in the ML probe response.

On the other hand, if the value of the Inclusion Flag subfield is set to 0, the AP that receives this includes update information corresponding to the value gap in the elements list category excluding elements (information from i) to v) above) provided through Beacon or Probe response frame in the critical updates elements list (information from a) to r) above) defined in TIM Broadcast and transmit it when providing update information through an ML probe response.

If an ML probe request is sent with the value of the Inclusion Flag subfield set to 0 and if the gap is 1 and the critical update is only one of the elements (information from i) to v) provided through the Beacon or Probe response frame, the AP that received this can transmit it without the STA profile field in the per-STA profile for that AP in the ML probe response.

For example, if STA (x) requests updated BSS Parameters information for a specific AP (y) (meaning an AP other than the STA's associated AP (x)), the STA (x) sets Critical Update Requested = 1 and Inclusion Flag = 0 in the STA Control field of the per-STA profile corresponding to the requested AP (y) in the Probe request ML IE of the ML probe request and the STA (x) can be transmitted by including the Last Known BPCC subfield in the per-STA profile.

The AP (x) that received this compares the Last Known BPCC value included in the delivered per-STA profile (y) with the most recent BPCC value of AP (y), and transmits the updated BSS Parameters information corresponding to the gap in the ML probe response by including it in the per-STA profile (i.e., AP (y)) corresponding to the requested AP.

At this time, if a critical update event occurs for the Channel Switch element and EHT Operation element, since the non-AP STA requested Inclusion Flag = 0, only information related to the EHT Operation element update is included and transmitted in the per-STA profile. This is because the elements (information from i) to v) provided through the Beacon or Probe response frame include a Channel Switch element.

If a non-AP STA makes a request by setting Inclusion Flag = 1, all elements related to the critical update are included in the transmission category, so both the updated Channel Switch element and EHT Operation element information are included and transmitted.

For example, it is assmued that the most recent BPCC value of other AP is 4, the BPCC value changes from 1 to 2 when A element is updated, the BPCC value changes from 2 to 3 when the B element is updated, and the BPCC value changes from 3 to 4 when the C element is updated.

When a non-AP STA requests updated information from another AP through an ML probe request including the Critical Update Requested subfield, Last Known BPCC subfield, and Inclusion Flag subfield, the information included in the ML probe response according to the value of the above subfield is as follows.

For example, if the Critical Update Requested subfield is set to 1 and the Last Known BPCC subfield includes a BPCC value of 1, the non-AP requests critical update information from the other AP, and the latest BPCC value received through the first beacon or first probe response frame is 1. Accordingly, the AP may know that the difference between the most recent BPCC value of the other AP and the most recent BPCC value of the non-AP STA is 3, and may attempt to include updated A, B, and C elements corresponding to the difference in BPCC values of 3 in the ML probe response.

However, if the Inclusion Flag subfield is set to 0, since the non-AP informs through a second beacon or a second probe response frame that it has already obtained the most recent BPCC value of 4 of the other AP, when the BPCC value is 4, the updated C element is not included in the ML probe response, and only the updated A and B elements can be included in the ML probe response. When the Inclusion Flag subfield is set to 1, the AP may respond to the ML probe response by including updated A, B, and C elements corresponding to a difference of 3 in BPCC values.

As another example, if the Critical Update Requested subfield is set to 1 and the Last Known BPCC subfield contains a BPCC value of 2, the non-AP requests critical update information from the other AP and informs that the latest BPCC value received through the first beacon or first probe response frame is 2. Accordingly, the AP may know that the difference between the most recent BPCC value of the other AP and the most recent BPCC value of the non -AP STA is 2, and may attempt to include updated B and C elements corresponding to the difference in BPCC values of 2 in the ML probe response.

However, if the Inclusion Flag subfield is set to 0, since the non-AP informs through a second beacon or a second probe response frame that it has already obtained the most recent BPCC value of 4 of the other AP, if the BPCC value is 4, the updated C element is not included in the ML probe response, and only the updated B element can be included in the ML probe response. When the Inclusion Flag subfield is set to 1, the AP may respond to the ML probe response by including updated B and C elements corresponding to a difference of 2 in BPCC values.

As another example, if the Critical Update Requested subfield is set to 1 and the Last Known BPCC subfield contains a BPCC value of 3, the non-AP requests critical update information from the other AP and informs that the latest BPCC value received through the first beacon or first probe response frame is 3. Accordingly, the AP knows that the difference between the most recent BPCC value of the other AP and the most recent BPCC value of the non-AP STA is 1, and may attempt to include an updated C element corresponding to the difference in BPCC values of 1 in the ML probe response.

However, if the Inclusion Flag subfield is set to 0, since the non-AP informs through a second beacon or a second probe response frame that it has already obtained the most recent BPCC value of 4 of the other AP, when the BPCC value is 4, the updated C element is not included in the ML probe response, so no element may be included in the ML probe response. When the Inclusion Flag subfield is set to 1, the AP may respond by including an updated C element corresponding to the difference in BPCC values of 1 in the ML probe response.

Through this method, when a non-AP STA requests update information related to a critical update for another AP, if it has already received some critical update information periodically through a Beacon or Probe response frame, to prevent receiving duplicate information, a new indicator (Inclusion Flag subfield) can be used, which can reduce the overhead for receiving duplicate information.

Hereinafter, the above-described embodiment will be described with reference to FIG. 1 to FIG. 19.

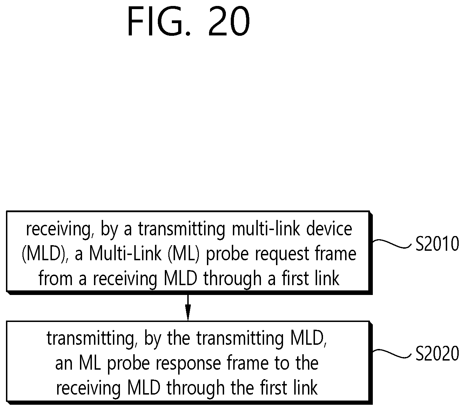

FIG. 20 is a flowchart illustrating a procedure in which a transmitting MLD responses critical update information to another AP using an indicator to prevent duplication of reception of partial critical update information according to this embodiment.

The example of FIG. 20 may be performed in a network environment in which a next generation WLAN system ( IEEE 802.11be or EHT WLAN system) is supported. The next generation wireless LAN system is a WLAN system that is enhanced from an 802.11ax system and may, therefore, satisfy backward compatibility with the 802.11ax system.

The present embodiment proposes an optimized signaling method and device through an ML probe request frame using a newly defined indicator to prevent the reception of duplicate information when a non -AP STA requests critical update information on another AP within the AP MLD, but has already received partial critical update information through a beacon or probe response frame periodically. Here, a first transmitting STA operating on a first link included in a transmitting MLD may correspond to a reporting AP. A second transmitting STA operating on a second link rather than the first link may correspond to another AP or a requested AP.

In step S2010, a transmitting Multi-Link Device (MLD) receives a Multi-Link (ML) probe request frame from a receiving MLD through a first link.

In step S2020, the transmitting MLD transmits an ML probe response frame to the receiving MLD through the first link.

The transmitting MLD includes a first transmitting station (STA) operating on the first link and a second transmitting STA operating on a second link. The receiving MLD includes a first receiving STA operating on the first link and a second receiving STA operating on the second link.

The ML probe request frame includes a profile subelement of the second transmitting STA.

The profile subelement of the second transmitting STA includes a Critical Update Requested subfield and an Inclusion Flag subfield.

When/Based on the first receiving STA requests/requesting critical update information for the second transmitting STA, a value of the Critical Update Requested subfield is set to 1, and the profile subelement of the second transmitting STA further includes a Last Known Basic Service Set (BSS) Parameters Change Count (BPCC) subfield.

The Last Known BPCC subfield includes a first BPCC value most recently obtained by the first receiving STA through a first beacon or a first probe response frame.

When/Based on a value of the Inclusion Flag subfield is/being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.

When/Based on the value of the Inclusion Flag subfield is/being 0, the second BPCC value may be obtained through a second beacon or a second probe response frame before the ML probe request frame is transmitted. The second beacon or the second probe response frame may be transmitted before the ML probe request frame is received, or may be transmitted before the ML probe response frame is transmitted.

That is, this embodiment proposes a signaling method that uses the Inclusion Flag subfield to prevent redundant information from being transmitted in the ML probe response frame when partial critical update information is received through a beacon or probe response frame by further including the Inclusion Flag subfield in the ML probe request frame. This has the effect of reducing the overhead of receiving duplicate information by using a newly defined indicator when a non-AP STA requests critical update information for another STA.

When/Based on the value of the Inclusion Flag subfield is/being 1, the ML probe response frame may include update information on an updated first element corresponding to the difference between the first BPCC value and the second BPCC value. When/Based on the value of the Inclusion Flag subfield is/being 1, the ML probe response frame may include updated BSS parameter information corresponding to the difference between the first BPCC value and the second BPCC value or update information on all elements related to the critical update.

Specific examples of the above-mentioned first to third elements and the first and second BPCC values may be described as follows.

It is assumed that the first element includes the second element, a fourth element and a fifth element, based on the fourth element being updated, a BPCC value of the second transmitting STA changes from 1 to 2, based on the fifth element being updated, the BPCC value of the second transmitting STA changes from 2 to 3, based on the second element being updated, the BPCC value of the second transmitting STA changes from 3 to 4.

When the first BPCC value is 1 and the second BPCC value is 4, based on the value of the Inclusion Flag subfield being 0, a second transmitting STA profile subelement of the ML probe response frame may include update information for the fourth and fifth elements. Since the difference between the first and second BPCC values is 3, the ML probe response frame may include all of the second, fourth, and fifth elements, but since the value of the Inclusion Flag subfield is 0, this is becau se the second element updated according to the second BPCC value can be excluded from the ML probe response frame, considering that it has already been received through the second beacon or the second probe response frame.

Based on the value of the Inclusion Flag subfield being 1, the second transmitting STA profile subelement of the ML probe response frame may include update information for the second, fourth, and fifth elements.

As another example, when the first BPCC value is 2 and the second BPCC value is 4, based on the value of the Inclusion Flag subfield being 0, a second transmitting STA profile subelement of the ML probe response frame may include update information for the fifth element. Since the difference between the first and second BPCC values is 2, the ML probe response frame may include the second and fifth elements, but since the value of the Inclusion Flag subfield is 0, this is because the second element updated according to the second BPCC value can be excluded from the ML probe response frame, considering that it has already been received through the second beacon or the second probe response frame.

Based on the value of the Inclusion Flag subfield being 1, the second transmitting STA profile subelement of the ML probe response frame may include update information for the second and fifth elements.

As another example, when the first BPCC value is 3 and the second BPCC value is 4, based on the value of the Inclusion Flag subfield being 0, a second transmitting STA profile subelement of the ML probe response frame may not include update information for any element. Since the difference between the first and second BPCC values is 1, the ML probe response frame may include the second element, but since the value of the Inclusion Flag subfield is 0, this is because the second element updated according to the second BPCC value can be excluded from the ML probe response frame, considering that it has already been received through the second beacon or the second probe response frame.

Based on the value of the Inclusion Flag subfield being 1, the second transmitting STA profile subelement of the ML probe response frame may include update information for the second element.

The first element may be classified as a critical update to the AP's operating parameters. The first element may include at least one of Channel Switch Announcement element, Extended Channel Switch Announcement element, EDCA(Enhanced Distributed Channel Access) parameters element, Quiet element, DSSS(Direct Sequence Spread Spectrum) Parameter Set, HT(High Throughput) Operation element, Wide Bandwidth Channel Switch element, Channel Switch Wrapper element, Operating Mode Notification element, Quiet Channel element, VHT(Very High Throughput) Operation element, HE(High Efficiency) Operation element, Broadcast TWT(Target Wake Time) element, BSS(Basic Service Set) Color Change Announcement element, MU(Multi User) EDCA Parameter Set element, Spatial Reuse Parameter Set element, UORA(Uplink OFDMA Random Access) Parameter Set element and EHT(Extremely High Throughput) Operation element,

The second element may be some element classified as critical update information through a beacon or probe response frame for a specific period in the Multi-Link procedure for channel switching, extended channel switching, and channel quieting. The second element may include at least one of Channel Switch Announcement element, Extended Channel Switch Announcement element, Max Channel Switch Time element, Quiet element and Quiet Channel element.

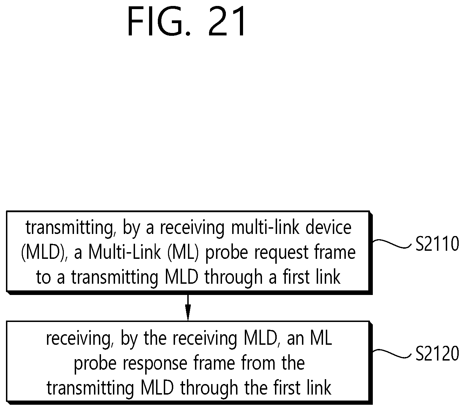

FIG. 21 is a flowchart illustrating a procedure in which a receiving MLD requests critical update information for another AP using an indicator to prevent duplication of reception of partial critical update information according to this embodiment.

The example of FIG. 21 may be performed in a network environment in which a next generation WLAN system (IEEE 802.11be or EHT WLAN system) is supported. The next generation wireless LAN system is a WLAN system that is enhanced from an 802.11ax system and may, therefore, satisfy backward compatibility with the 802.11ax system.

The present embodiment proposes an optimized signaling method and device through an ML probe request frame using a newly defined indicator to prevent the reception of duplicate information when a non-AP STA requests critical update information on another AP within the AP MLD, but has already received partial critical update information through a beacon or probe response frame periodically. Here, a first transmitting STA operating on a first link included in a transmitting MLD may correspond to a reporting AP. A second transmitting STA operating on a second link rather than the first link may correspond to another AP or a requested AP.

In step S2110, a receiving Multi-link Device (MLD) transmits a Multi-Link (ML) probe request frame to a transmitting MLD through a first link.

In step S2120, the receiving MLD receives an ML probe response frame from the transmitting MLD through the first link.

The transmitting MLD includes a first transmitting station (STA) operating on the first link and a second transmitting STA operating on a second link. The receiving MLD includes a first receiving STA operating on the first link and a second receiving STA operating on the second link.

The ML probe request frame includes a profile subelement of the second transmitting STA.

The profile subelement of the second transmitting STA includes a Critical Update Requested subfield and an Inclusion Flag subfield.

When/Based on the first receiving STA requests/requesting critical update information for the second transmitting STA, a value of the Critical Update Requested subfield is set to 1, and the profile subelement of the second transmitting STA further includes a Last Known Basic Service Set (BSS) Parameters Change Count (BPCC) subfield.

The Last Known BPCC subfield includes a first BPCC value most recently obtained by the first receiving STA through a first beacon or a first probe response frame.

When/Based on a value of the Inclusion Flag subfield is/being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.

When/Based on the value of the Inclusion Flag subfield is/being 0, the second BPCC value may be obtained through a second beacon or a second probe response frame before the ML probe request frame is transmitted. The second beacon or the second probe response frame may be transmitted before the ML probe request frame is received, or may be transmitted before th e ML probe response frame is transmitted.

That is, this embodiment proposes a signaling method that uses the Inclusion Flag subfield to prevent redundant information from being transmitted in the ML probe response frame when partial critical update information is received through a beacon or probe response frame by further including the Inclusion Flag subfield in the ML probe request frame. This has the effect of reducing the overhead of receiving duplicate information by using a newly defined indicator when a non -AP STA requests critical update information for another STA.

When/Based on the value of the Inclusion Flag subfield is/being 1, the ML probe response frame may include update information on an updated first element corresponding to the difference between the first BPCC value and the second BPCC value. When/Based on the value of the Inclusion Flag subfield is/being 1, the ML probe response frame may include updated BSS parameter information corresponding to the difference between the first BPCC value and the second BPCC value or update information on all elements related to the critical update.

Specific examples of the above-mentioned first to third elements and the first and second BPCC values may be described as follows.

It is assumed that the first element includes the second element, a fourth element and a fifth element, based on the fourth element being updated, a BPCC value of the second transmitting STA changes from 1 to 2, based on the fifth element being updated, the BPCC value of the second transmitting STA changes from 2 to 3, based on the second element being updated, the BPCC value of the second transmitting STA changes from 3 to 4.

When the first BPCC value is 1 and the second BPCC value is 4, based on the value of the Inclusion Flag subfield being 0, a second transmitting STA profile subelement of the ML probe response frame may include update information for the fourth and fifth elements. Since the difference between the first and second BPCC values is 3, the ML probe response frame may include all of the second, fourth, and fifth elements, but since the value of the Inclusion Flag subfield is 0, this is because the second element updated according to the second BPCC value can be excluded from the ML probe response frame, considering that it has already been received through the second beacon or the second probe response frame.

Based on the value of the Inclusion Flag subfield being 1, the second transmitting STA profile subelement of the ML probe response frame may include update information for the second, fourth, and fifth elements.

As another example, when the first BPCC value is 2 and the second BPCC value is 4, based on the value of the Inclusion Flag subfield being 0, a second transmitting STA profile subelement of the ML probe response frame may include update information for the fifth element. Since the difference between the first and second BPCC values is 2, the ML probe response frame may include the second and fifth elements, but since the value of the Inclusion Flag subfield is 0 , this is because the second element updated according to the second BPCC value can be excluded from the ML probe response frame, considering that it has already been received through the second beacon or the second probe response frame.

Based on the value of the Inclusion Flag subfield being 1, the second transmitting STA profile subelement of the ML probe response frame may include update information for the second and fifth elements.

As another example, when the first BPCC value is 3 and the second BPCC value is 4, based on the value of the Inclusion Flag subfield being 0, a second transmitting STA profile subelement of the ML probe response frame may not include update information for any element. Since the difference between the first and second BPCC values is 1, the ML probe response frame may include the second element, but since the value of the Inclusion Flag subfield is 0, this is because the second element updated according to the second BPCC value can be excluded from the ML probe response frame, considering that it has already been received through the second beacon or the second probe response frame.

Based on the value of the Inclusion Flag subfield being 1, the second transmitting STA profile subelement of the ML probe response frame may include update information for the second element.

The first element may be classified as a critical update to the AP's operating parameters. The first element may include at least one of Channel Switch Announcement element, Extended Channel Switch Announcement element, EDCA(Enhanced Distributed Channel Access) parameters element, Quiet element, DSSS(Direct Sequence Spread Spectrum) Parameter Set, HT(High Throughput) Operation element, Wide Bandwidth Channel Switch element, Channel Switch Wrapper element, Operating Mode Notification element, Quiet Channel element, VHT(Very High Throughput) Operation element, HE(High Efficiency) Operation element, Broadcast TWT(Target Wake Time) element, BSS(Basic Service Set) Color Change Announcement element, MU(Multi User) EDCA Parameter Set element, Spatial Reuse Parameter Set element, UORA(Uplink OFDMA Random Access) Parameter Set element and EHT(Extremely High Throughput) Operation element,

The second element may be some element classified as critical update information through a beacon or probe response frame for a specific period in the Multi-Link procedure for channel switching, extended channel switching, and channel quieting. The second element may include at least one of Channel Switch Announcement element, Extended Channel Switch Announcement element, Max Channel Switch Time element, Quiet element and Quiet Channel element.

The technical features of the present disclosure may be applied to various devices and methods. For example, the technical features of the present disclosure may be performed/supported through the device(s) of FIG. 1 and/or FIG. 11. For example, the technical features of the present disclosure may be applied to only part of FIG. 1 and/or FIG. 11. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 11. For example, the device according to the present disclosure transmits a Multi-Link (ML) probe request frame to a transmitting multi-link device (MLD) through a first link; and receives an ML probe response frame from the transmitting MLD through the first link.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including transmitting a Multi-Link (ML) probe request frame to a transmitting multi-link device (MLD) through a first link; and receiving an ML probe response frame from the transmitting MLD through the first link. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 11. Meanwhile, the CRM of the present disclosure m ay be the memory 112, 122 of FIG. 1, the memory 620 of FIG. 11, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot jo int. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR techno logy is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method. Advantageous aspects of the present disclosure can be phrased as follows:
Aspect 1. A method in a wireless local area network (WLAN) system, the method comprising:
   transmitting, by a receiving multi-link device (MLD), a Multi-Link (ML) probe request frame to a transmitting MLD through a first link; and
   receiving, by the receiving MLD, an ML probe response frame from the transmitting MLD through the first link,
   wherein the transmitting MLD includes a first transmitting station (STA) operating on the first link and a second transmitting STA operating on a second link,
   wherein the receiving MLD includes a first receiving STA operating on the first link and a second receiving STA operating on the second link,
   wherein the ML probe request frame includes a profile subelement of the second transmitting STA,
   wherein the profile subelement of the second transmitting STA includes a Critical Update Requested subfield and an Inclusion Flag subfield,
   wherein based on the first receiving STA requesting critical update information for the second transmitting STA, a value of the Critical Update Requested subfield is set to 1, and the profile subelement of the second transmitting STA further includes a Last Known Basic Service Set (BSS) Parameters Change Count (BPCC) subfield,
   wherein the Last Known BPCC subfield includes a first BPCC value most recently obtained by the first receiving STA through a first beacon or a first probe response frame, and
   wherein based on a value of the Inclusion Flag subfield being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.
Aspect 2. The method of aspect 1, wherein based on the value of the Inclusion Flag subfield being 0, the second BPCC value is obtained through a second beacon or a second probe response frame before the ML probe request frame is transmitted.
Aspect 3. The method of aspect 1, wherein based on the value of the Inclusion Flag subfield being 1, the ML probe response frame includes update information on an updated first element corresponding to the difference between the first BPCC value and the second BPCC value.
Aspect 4. The method of aspect 3, wherein the first element includes the second element, a fourth element and a fifth element,
   wherein based on the fourth element being updated, a BPCC value of the second transmitting STA changes from 1 to 2,
   wherein based on the fifth element being updated, the BPCC value of the second transmitting STA changes from 2 to 3,
   wherein based on the second element being updated, the BPCC value of the second transmitting STA changes from 3 to 4.
Aspect 5. The method of aspect 4, wherein when the first BPCC value is 1 and the second BPCC value is 4,
   based on the value of the Inclusion Flag subfield being 0, a second transmitting STA profile subelement of the ML probe response frame includes update information for the fourth and fifth elements,
   based on the value of the Inclusion Flag subfield being 1, the second transmitting STA profile subelement of the ML probe response frame includes update information for the second, fourth, and fifth elements.
Aspect 6. The method of aspect 4, wherein when the first BPCC value is 2 and the second BPCC value is 4,
   based on the value of the Inclusion Flag subfield being 0, a second transmitting STA profile subelement of the ML probe response frame includes update information for the fifth element,
   based on the value of the Inclusion Flag subfield being 1, the second transmitting STA profile subelement of the ML probe response frame includes update information for the second and fifth elements.
Aspect 7. The method of aspect 4, wherein when the first BPCC value is 3 and the second BPCC value is 4,
   based on the value of the Inclusion Flag subfield being 0, a second transmitting STA profile subelement of the ML probe response frame does not include update information for any element,
   based on the value of the Inclusion Flag subfield being 1, the second transmitting STA profile subelement of the ML probe response frame includes update information for the second element.
Aspect 8. The method of aspect 1, wherein the first element includes at least one of Channel Switch Announcement element, Extended Channel Switch Announcement element, EDCA(Enhanced Distributed Channel Access) parameters element, Quiet element, DSSS(Direct Sequence Spread Spectrum) Parameter Set, HT(High Throughput) Operation element, Wide Bandwidth Channel Switch element, Channel Switch Wrapper element, Operating Mode Notification element, Quiet Channel element, VHT(Very High Throughput) Operation element, HE(High Efficiency) Operation element, Broadcast TWT(Target Wake Time) element, BSS(Basic Service Set) Color Change Announcement element, MU(Multi User) EDCA Parameter Set element, Spatial Reuse Parameter Set element, UORA(Uplink OFDMA Random Access) Parameter Set element and EHT(Extremely High Throughput) Operation element,
   wherein the second element includes at least one of Channel Switch Announcement element, Extended Channel Switch Announcement element, Max Channel Switch Time element, Quiet element and Quiet Channel element.
Aspect 9. A receiving multi-link device (MLD) in a wireless local area network (WLAN) system, the receiving MLD comprising:
   a memory;
   a transceiver; and
   a processor being operatively connected to the memory and the transceiver,
   wherein the processor is configured to:
      transmit a Multi-Link (ML) probe request frame to a transmitting MLD through a first link; and
      receive an ML probe response frame from the transmitting MLD through the first link,
      wherein the transmitting MLD includes a first transmitting station (STA) operating on the first link and a second transmitting STA operating on a second link,
      wherein the receiving MLD includes a first receiving STA operating on the first link and a second receiving STA operating on the second link,
      wherein the ML probe request frame includes a profile subelement of the second transmitting STA,
      wherein the profile subelement of the second transmitting STA includes a Critical Update Requested subfield and an Inclusion Flag subfield,
      wherein based on the first receiving STA requesting critical update information for the second transmitting STA, a value of the Critical Update Requested subfield is set to 1, and the profile subelement of the second transmitting STA further includes a Last Known Basic Service Set (BSS) Parameters Change Count (BPCC) subfield,
      wherein the Last Known BPCC subfield includes a first BPCC value most recently obtained by the first receiving STA through a first beacon or a first probe response frame, and
      wherein based on a value of the Inclusion Flag subfield being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.
Aspect 10. A method in a wireless local area network (WLAN) system, the method comprising:
   receiving, by a transmitting multi-link device (MLD), a Multi-Link (ML) probe request frame from a receiving MLD through a first link; and
   transmitting, by the transmitting MLD, an ML probe response frame to the receiving MLD through the first link,
   wherein the transmitting MLD includes a first transmitting station (STA) operating on the first link and a second transmitting STA operating on a second link,
   wherein the receiving MLD includes a first receiving STA operating on the first link and a second receiving STA operating on the second link,
   wherein the ML probe request frame includes a profile subelement of the second transmitting STA,
   wherein the profile subelement of the second transmitting STA includes a Critical Update Requested subfield and an Inclusion Flag subfield,
   wherein based on the first receiving STA requesting critical update information for the second transmitting STA, a value of the Critical Update Requested subfield is set to 1, and the profile subelement of the second transmitting STA further includes a Last Known Basic Service Set (BSS) Parameters Change Count (BPCC) subfield,
   wherein the Last Known BPCC subfield includes a first BPCC value most recently obtained by the first receiving STA through a first beacon or a first probe response frame, and
   wherein based on a value of the Inclusion Flag subfield being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.
Aspect 11. The method of aspect 10, wherein based on the value of the Inclusion Flag subfield being 0, the second BPCC value is obtained through a second beacon or a second probe response frame before the ML probe request frame is transmitted.
Aspect 12. The method of aspect 10, wherein based on the value of the Inclusion Flag subfield being 1, the ML probe response frame includes update information on an updated first element corresponding to the difference between the first BPCC value and the second BPCC value.
Aspect 13. The method of aspect 12, wherein the first element includes the second element, a fourth element and a fifth element,
   wherein based on the fourth element being updated, a BPCC value of the second transmitting STA changes from 1 to 2,
   wherein based on the fifth element being updated, the BPCC value of the second transmitting STA changes from 2 to 3,
   wherein based on the second element being updated, the BPCC value of the second transmitting STA changes from 3 to 4.
Aspect 14. The method of aspect 13, wherein when the first BPCC value is 1 and the second BPCC value is 4,
   based on the value of the Inclusion Flag subfield being 0, a second transmitting STA profile subelement of the ML probe response frame includes update information for the fourth and fifth elements,
   based on the value of the Inclusion Flag subfield being 1, the second transmitting STA profile subelement of the ML probe response frame includes update information for the second, fourth, and fifth elements.
Aspect 15. The method of aspect 13, wherein when the first BPCC value is 2 and the second BPCC value is 4,
   based on the value of the Inclusion Flag subfield being 0, a second transmitting STA profile subelement of the ML probe response frame includes update information for the fifth element,
   based on the value of the Inclusion Flag subfield being 1, the second transmitting STA profile subelement of the ML probe response frame includes update information for the second and fifth elements.
Aspect 16. The method of aspect 13, wherein when the first BPCC value is 3 and the second BPCC value is 4,
   based on the value of the Inclusion Flag subfield being 0, a second transmitting STA profile subelement of the ML probe response frame does not include update information for any element,
   based on the value of the Inclusion Flag subfield being 1, the second transmitting STA profile subelement of the ML probe response frame includes update information for the second element.
Aspect 17. The method of aspect 10, wherein the first element includes at least one of Channel Switch Announcement element, Extended Channel Switch Announcement element, EDCA(Enhanced Distributed Channel Access) parameters element, Quiet element, DSSS(Direct Sequence Spread Spectrum) Parameter Set, HT(High Throughput) Operation element, Wide Bandwidth Channel Switch element, Channel Switch Wrapper element, Operating Mode Notification element, Quiet Channel element, VHT(Very High Throughput) Operation element, HE(High Efficiency) Operation element, Broadcast TWT(Target Wake Time) element, BSS(Basic Service Set) Color Change Announcement element, MU(Multi User) EDCA Parameter Set element, Spatial Reuse Parameter Set element, UORA(Uplink OFDMA Random Access) Parameter Set element and EHT(Extremely High Throughput) Operation element,
   wherein the second element includes at least one of Channel Switch Announcement element, Extended Channel Switch Announcement element, Max Channel Switch Time element, Quiet element and Quiet Channel element.
Aspect 18. A transmitting multi-link device (MLD) in a wireless local area network (WLAN) system, the transmitting MLD comprising:
   a memory;
   a transceiver; and
   a processor being operatively connected to the memory and the transceiver,
   wherein the processor is configured to:
      receive a Multi-Link (ML) probe request frame from a receiving MLD through a first link; and
      transmit an ML probe response frame to the receiving MLD through the first link,
      wherein the transmitting MLD includes a first transmitting station (STA) operating on the first link and a second transmitting STA operating on a second link,
      wherein the receiving MLD includes a first receiving STA operating on the first link and a second receiving STA operating on the second link,
      wherein the ML probe request frame includes a profile subelement of the second transmitting STA,
      wherein the profile subelement of the second transmitting STA includes a Critical Update Requested subfield and an Inclusion Flag subfield,
      wherein based on the first receiving STA requesting critical update information for the second transmitting STA, a value of the Critical Update Requested subfield is set to 1, and the profile subelement of the second transmitting STA further inclu des a Last Known Basic Service Set (BSS) Parameters Change Count (BPCC) subfield,
      wherein the Last Known BPCC subfield includes a first BPCC value most recently obtained by the first receiving STA through a first beacon or a first probe response frame, and
      wherein based on a value of the Inclusion Flag subfield being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.
Aspect 19. A computer readable medium including an instruction being executed by at least one processor and performing a method comprising the steps of:
   transmitting a Multi-Link (ML) probe request frame to a transmitting multi-link device (MLD) through a first link; and
   receiving an ML probe response frame from the transmitting MLD through the first link,
   wherein the transmitting MLD includes a first transmitting station (STA) operating on the first link and a second transmitting STA operating on a second link,
   wherein the receiving MLD includes a first receiving STA operating on the first link and a second receiving STA operating on the second link,
   wherein the ML probe request frame includes a profile subelement of the second transmitting STA,
   wherein the profile subelement of the second transmitting STA includes a Critical Update Requested subfield and an Inclusion Flag subfield,
   wherein based on the first receiving STA requesting critical update information for the second transmitting STA, a value of the Critical Update Requested subfield is set to 1, and the profile subelement of the second transmitting STA further includes a Last Known Basic Service Set (BSS) Parameters Change Count (BPCC) subfield,
   wherein the Last Known BPCC subfield includes a first BPCC value most recently obtained by the first receiving STA through a first beacon or a first probe response frame, and
   wherein based on a value of the Inclusion Flag subfield being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.
Aspect 20. A device in a wireless local area network (WLAN) system, the device comprising:
   a memory; and
   a processor being operatively connected to the memory,
   wherein the processor is configured to:
      transmit a Multi-Link (ML) probe request frame to a transmitting multi-link device (MLD) through a first link; and
      receive an ML probe response frame from the transmitting MLD through the first link,
      wherein the transmitting MLD includes a first transmitting station (STA) operating on the first link and a second transmitting STA operating on a second link,
      wherein the receiving MLD includes a first receiving STA operating on the first link and a second receiving STA operating on the second link,
      wherein the ML probe request frame includes a profile subelement of the second transmitting STA,
      wherein the profile subelement of the second transmitting STA includes a Critical Update Requested subfield and an Inclusion Flag subfield,
      wherein based on the first receiving STA requesting critical update information for the second transmitting STA, a value of the Critical Update Requested subfield is set to 1, and the profile subelement of the second transmitting STA further includes a Last Known Basic Service Set (BSS) Parameters Change Count (BPCC) subfield,
      wherein the Last Known BPCC subfield includes a first BPCC value most recently obtained by the first receiving STA through a first beacon or a first probe response frame, and
      wherein based on a value of the Inclusion Flag subfield being 0, the ML probe response frame includes update information on a third element excluding a second element updated according to a second BPCC value among updated first elements corresponding to a difference between the first BPCC value and the second BPCC value, and the second BPCC value is the most recent BPCC value of the second transmitting STA.

## Claims

1. A method performed by a non-access point, non-AP, multi-link device, MLD, in a wireless local area network, WLAN, system, the method comprising:
receiving, by a non-AP STA affiliated with the non-AP MLD, a management frame from an AP affiliated with an AP MLD (S2120),
wherein the management frame includes updated elements corresponding to a reported AP affiliated with the AP MLD,
wherein an Inclusion Flag subfield indicates whether updated elements corresponding to a latest critical update for the reported AP are included in the management frame,
wherein based on the updated elements corresponding to the latest critical update being included in the management frame, a value of the Inclusion Flag subfield has a first value,
wherein the latest critical update causes a Basic Service Set (BSS) Parameters Change Count (BPCC) field for the reported AP to be changed,
wherein the value of the Inclusion Flag subfield remains set to the first value until the updated elements correspo nding to the latest critical update are no longer included in the management frame, and
wherein based on the updated elements corresponding to the latest critical update no longer being included in the management frame, a value of the Inclusion Flag subfield has a second value different from the first value.

2. The method of claim 1, wherein based on the Inclusion Flag subfield having the first value, the updated elements corresponding to the latest critical update include all elements associated with the latest critical update for the reported AP.

3. The method of claim 1, wherein based on the Inclusion Flag subfield having the second value, the updated elements corresponding to the latest critical update exclude at least one element associated with the latest critical update for the reported AP.

4. The method of claim 1, wherein the updated elements correspond to a difference between a last known BPCC value of the non-AP STA and a current BPCC value corresponding to the reported AP.

5. The method of claim 4, wherein the last known BPCC value of the non-AP STA is obtained through a previous management frame.

6. The method of claim 1, wherein the reported AP is different from the AP with which the non -AP STA is associated,
wherein the AP affiliated with the AP MLD is a reporting AP affiliated with the AP MLD.

7. The method of claim 1, wherein the updated elements include at least one of Channel Switch Announcement element, Extended Channel Switch Announcement element, EDCA(Enhanced Distributed Channel Access) parameters element, Quiet element, DSSS(Direct Sequence Spread Spectrum) Parameter Set, HT(High Throughput) Operation element, Wide Bandwidth Channel Switch element, Channel Switch Wrapper element, Operating Mode Notification element, Quiet Channel element, VHT(Very High Throughput) Operation element, HE(High Efficiency) Operation element, Broadcast TWT(Target Wake Time) element, BSS(Basic Service Set) Color Change Announcement element, MU(Multi User) EDCA Parameter Set element, Spatial Reuse Parameter Set element, UORA(Uplink OFDMA Random Access) Parameter Set element and EHT(Extremely High Throughput) Operation element, Channel Switch Announcement element, Extended Channel Switch Announcement element, Max Channel Switch Time element, Quiet element and Quiet Channel element.

8. A non-access point, non-AP, multi-link device, MLD, for a wireless local area network, WLAN, system, the non-AP MLD comprising:
a memory;
a transceiver; and
a processor being operatively connected to the memory and the transceiver,
wherein the processor is configured to:
receive, by a non-AP STA affiliated with the non-AP MLD, a management frame from an AP affiliated with an AP MLD (S2120),
wherein the management frame includes updated elements corresponding to a reported AP affiliated with the AP MLD,
wherein an Inclusion Flag subfield indicates whether updated elements corresponding to a latest critical update for the reported AP are included in the management frame,
wherein based on the updated elements corresponding to the latest critical update being included in the management frame, a value of the Inclusion Flag subfield has a first value,
wherein the latest critical update causes a Basic Service Set (BSS) Parameters Change Count (BPCC) field for the reported AP to be changed,
wherein the value of the Inclusion Flag subfield remains set to the first value until the updated elements corresponding to the latest critical update are no longer included in the management frame, and
wherein based on the updated elements corresponding to the latest critical update no longer being included in the management frame, a value of the Inclusion Flag subfield has a second value different from the first value.

9. A method performed by an access point, AP, multi-link device, MLD, in a wireless local area network, WLAN, system, the method comprising:
transmitting, by an AP affiliated with the AP MLD, a management frame to a non-AP station (STA) affiliated with a non-AP MLD (S2020),
wherein the management frame includes updated elements corresponding to a reported AP affiliated with the AP MLD,
wherein an Inclusion Flag subfield indicates whether updated elements corresponding to a latest critical update for the reported AP are included in the management frame,
wherein based on the updated elements corresponding to the latest critical update being included in the management frame, a value of the Inclusion Flag subfield has a first value,
wherein the latest critical update causes a Basic Service Set (BSS) Parameters Change Count (BPCC) field for the reported AP to be changed,
wherein the value of the Inclusion Flag subfield remains set to the first value until the updated elements corresponding to the latest critical update are no longer included in the management frame, and
wherein based on the updated elements corresponding to the latest critical update no longer being included in the management frame, a value of the Inclusion Flag subfield has a second value different from the first value.

10. The method of claim 9, wherein based on the Inclusion Flag subfield having the first value, the updated elements corresponding to the latest critical update include all elements associated with the latest critical update for the reported AP.

11. The method of claim 9, wherein based on the Inclusion Flag subfield having the second value, the updated elements corresponding to the latest critical update exclude at least one element associated with the latest critical update for the reported AP.

12. The method of claim 9, wherein the updated elements correspond to a difference between a last known BPCC value of the non-AP STA and a current BPCC value corresponding to the reported AP.

13. The method of claim 12, wherein the last known BPCC value of the non-AP STA is obtained through a previous management frame.

14. The method of claim 9, wherein the reported AP is different from the AP with which the non -AP STA is associated, wherein the AP affiliated with the AP MLD is a reporting AP affiliated with the AP MLD.

15. An access point, AP, multi-link device, MLD, in a wireless local area network (WLAN) system, the AP MLD comprising:
a memory;
a transceiver; and
a processor being operatively connected to the memory and the transceiver,
wherein the processor is configured to:
transmit, by an AP affiliated with the AP MLD, a management frame to a non-AP station, STA, affiliated with a non-AP MLD (S2020),
wherein the management frame includes updated elements corresponding to a reported AP affiliated with the AP MLD,
wherein an Inclusion Flag subfield indicates whether updated elements corresponding to a latest critical update for the reported AP are included in the management frame,
wherein based on the updated elements corresponding to the latest critical update being included in the management frame, a value of the Inclusion Flag subfield has a first value,
wherein the latest critical update causes a Basic Service Set, BSS, Parameters Change Count, BPCC, field for the reported AP to be changed,
wherein the value of the Inclusion Flag subfield remains set to the first value until the updated elements corresponding to the latest critical update are no longer included in the management frame, and
wherein based on the updated elements corresponding to the latest critical update no longer being included in the management frame, a value of the Inclusion Flag subfield has a second value different from the first value.
